(19) Europäisches Patentamt
European Patent Office
Office européen des brevets

(11) **EP 4 439 700 A2**

(12) **EUROPEAN PATENT APPLICATION**

(43) Date of publication:
**02.10.2024 Bulletin 2024/40**

(21) Application number: **24165917.6**

(22) Date of filing: **25.03.2024**

(51) International Patent Classification (IPC):
*H01M 4/131* (2010.01)    *H01M 4/36* (2006.01)
*H01M 4/505* (2010.01)    *H01M 4/525* (2010.01)
*H01M 4/58* (2010.01)    *H01M 4/587* (2010.01)
*H01M 4/62* (2006.01)    *H01M 10/0525* (2010.01)

(52) Cooperative Patent Classification (CPC):
**H01M 4/621; H01M 4/131; H01M 4/364;
H01M 4/366; H01M 4/505; H01M 4/525;
H01M 4/5825; H01M 4/587; H01M 4/624;
H01M 4/625; H01M 4/628; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.03.2023 KR 20230039370
27.07.2023 KR 20230098442**

(71) Applicant: **Samsung SDI Co., Ltd.
Yongin-si, Gyeonggi-do 17084 (KR)**

(72) Inventors:
 • **LEE, Jinhyon
 17084 Yongin-si (KR)**

 • **YOON, Yeonhee
 17084 Yongin-si (KR)**
 • **KIM, Seongdae
 17084 Yongin-si (KR)**
 • **KWON, Ilkyong
 17084 Yongin-si (KR)**
 • **NAM, Hyun
 17084 Yongin-si (KR)**
 • **LEE, Donggeun
 17084 Yongin-si (KR)**
 • **PYUN, Ahram
 17084 Yongin-si (KR)**

(74) Representative: **Marks & Clerk LLP
15 Fetter Lane
London EC4A 1BW (GB)**

(54) **DRY ELECTRODE FILM, DRY ELECTRODE INCLUDING THE SAME, AND LITHIUM BATTERY INCLUDING THE DRY ELECTRODE**

(57) A dry electrode film, a dry electrode including the same, and a lithium battery including the dry electrode are provided. The dry electrode film includes a dry electrode active material, a dry binder, and a nitrogen-containing anion, a nitrile group-containing compound, or a combination thereof, wherein the dry electrode active material includes a core and a shell conforming to a surface of the core, the shell includes at least one first metal oxide and a first carbonaceous material, the first metal oxide is in a matrix of the first carbonaceous material, and the first metal oxide is represented by $M_aO_b$ ($0<a\leq3$ and $0<b<4$, wherein if a is 1, 2, or 3, b is not an integer) wherein M is at least one metal selected from among Groups 2 to 16 in the Periodic Table of Elements.

FIG. 2

EP 4 439 700 A2

**Description**

**BACKGROUND**

**1. Field**

One or more embodiments relate to a dry electrode film, a dry electrode including the same, and a lithium battery including the dry electrode.

**2. Description of the Related Art**

In accordance with increased miniaturization and/or higher performance of various electronic and/or electric devices, it has become important for lithium batteries to have higher energy densities as well as reduced sizes and weights. In this regard, lithium batteries having high capacity have become increasingly important.

Because the manufacture of electrodes from a slurry containing an organic solvent may be undesired or utilizes an excess (or undesired) amount of the solvent, a dry method, which excludes (e.g., does not include or need) such organic solvents, is being investigated.

**SUMMARY**

Aspects of one or more embodiments of the present disclosure include a dry electrode film which has improved cycling performance due to decreased internal resistance and improved mechanical strength.

Aspects of one or more embodiments of the present disclosure include a dry electrode film which has improved high-rate performance due to decreased charge transfer resistance.

Aspects of one or more embodiments of the present disclosure include a dry electrode including the dry electrode film.

Aspects of one or more embodiments of the present disclosure include a lithium battery including the dry electrode.

Additional aspects will be set forth in part in the description which follows and, in part, will be apparent from the description, or may be learned by practice of the presented embodiments of the present disclosure.

According to one or more embodiments of the present disclosure, a dry electrode film includes a dry electrode active material, a dry binder, and a nitrogen-containing anion, a nitrile group-containing compound, or a combination (*e.g.*, any suitable combination) thereof, wherein the dry electrode active material includes a core and a shell conforming to a surface of the core, wherein the shell includes at least one first metal oxide, and include a first carbonaceous material, the first metal oxide being (*e.g.*, is disposed) in a matrix of the first carbonaceous material, wherein the first metal oxide is represented by $M_aO_b$ ($0<a\leq3$ and $0<b<4$, wherein if (e.g., when) a is 1, 2, or 3, b is not an integer), wherein M is at least one metal selected from among Group 2 to Group 16 in the Periodic Table of Elements (e.g., at least one metal selected from among Groups 2 to 13, Group 15, and/or Group 16 of the Periodic Table of Elements; or at least one metal selected from Group 13 of the Periodic Table of Elements).

According to one or more embodiments of the present disclosure, a dry electrode includes an electrode current collector, and the dry electrode film described above, disposed on one side or both sides (*e.g.*, opposite sides) of the electrode current collector.

According to one or more embodiments of the present disclosure, a lithium battery includes a first electrode, a second electrode, and an electrolyte (and/or a separator) between (*e.g.*, disposed between) the first electrode and the second electrode, wherein the first electrode, the second electrode, or a combination (*e.g.*, any suitable combination) thereof is the dry electrode described above, wherein the electrolyte is a liquid electrolyte, a solid electrolyte, a gel electrolyte, or a combination thereof, and wherein the solid electrolyte is an oxide-based solid electrolyte, a sulfide-based solid electrolyte, a polymer solid electrolyte, or a combination (*e.g.*, any suitable combination) thereof.

At least some of the above and other features of the invention are set out in the claims.

**BRIEF DESCRIPTION OF THE DRAWINGS**

The above and other aspects, features, and/or principles of certain embodiments of the present disclosure will be more apparent from the following description taken in conjunction with the accompanying drawings, in which:

FIGs. 1A - 1C are each a graph showing mass spectroscopy data of nitrogen-containing anions included in dry cathode films of Example 1 and Reference Example 1;

FIG. 2 is a schematic cross-sectional diagram of a dry electrode cathode active material according to one or more embodiments;

FIG. 3 is a schematic cross-sectional diagram of a dry electrode cathode active material according to one or more embodiments;

FIG. 4 is a graph showing an XPS analysis of a bare NCA91 prepared in Comparative Preparation Example 1, a composite cathode active material prepared in Preparation Example 1, and a composite cathode active material prepared in Preparation Example 2;

FIG. 5 is a graph showing a Raman spectrum analysis of a composite prepared in Preparation Example 1 and a composite cathode active material prepared in Preparation Example 2;

FIG. 6 is a schematic diagram of a lithium battery according to one or more embodiments;

FIG. 7 is a schematic diagram of a lithium battery according to one or more embodiments; and

FIG. 8 is a schematic diagram of a lithium battery according to one or more embodiments.

## DETAILED DESCRIPTION

The present disclosure may be modified in many alternate forms, and specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. The embodiments are merely described below, by referring to the drawings, to explain aspects of the present description.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c", "one from among a, b, and c", "at least one of a to c" indicates only a, only b, only c, both a and b, both a and c, both b and c, all of a, b, and c, or variations thereof.

Various embodiments are shown in the accompanied drawings. These embodiments may, however, be embodied in many different forms and should not be construed as limited to the example embodiments set forth herein. Rather, these example embodiments are provided so that this disclosure will be thorough and complete, and will fully convey the scope of the present disclosure s to those skilled in the art. In the drawings, like numbers refer to like elements throughout, and duplicative descriptions thereof may not be provided. In the drawings, the relative sizes of elements, layers, and regions may be exaggerated for clarity.

It will also be understood that when an element is referred to as being "on," "connected to," "coupled to," or "over" another element, it can be directly on, connected to, coupled to or over the other element or intervening elements may also be present. In contrast, when an element is referred to as being "directly on, directly connected to," "directly coupled to," or "directly over" another element, there are no intervening elements present. In addition, it will also be understood that when an element or layer is referred to as being "between" two elements or layers, it can be the only element or layer between the two elements or layers, or one or more intervening elements or layers may also be present.

It will be understood that, although the terms "first", "second," "third," *etc.* may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. For example, a first element, component, region, layer, or section could be termed a second element, component, region, layer, or section, without departing from the teachings of the present disclosure.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. The term "at least one" should not be interpreted as being limited to a singular form. It will be further understood that the terms "comprises," "comprising," "includes," and/or "including" when used in this specification, specify the presence of the stated features, regions, integers, steps, operations, elements, and/or components, but do not preclude the presence or addition of one or more other features, regions, integers, steps, operations, elements, components, and/or groups thereof.

Furthermore, spatially relative terms, such as "lower," "bottom," or "below" and "upper," "top," or "above" may be used herein to conveniently describe one element or feature's relationship to another element or feature. It will be understood that spatially relative terms are intended to encompass different orientations of the device while the device is in use or in operation, in addition to the orientation depicted in the drawings. For example, if the device in one of the drawings is turned over, elements described as being on the "lower" or "bottom" side of other elements would then be oriented on "upper" or "top" sides of the other elements. Therefore, the example term "lower" can encompasses both an orientation of "lower" and "upper." The device may be placed in other orientations (*e.g.*, may be rotated by 90 degrees or at other orientations), and spatially relative terms used herein may be interpreted accordingly.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the specification and/or the relevant art and should not be interpreted in an idealized or overly formal sense, unless expressly so defined herein.

Embodiments are described herein with reference to cross section illustrations that are schematic illustrations of idealized embodiments. As such, variations from the illustrated shapes as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present claims.

In the present disclosure, the term "dry" or "dry method" refers to a state deliberately not in contact with solvents, e.g., processing solvents, or a state deliberately devoid of solvents. For example, the term "dry electrode active material" refers to an electrode active material deliberately not in contact with solvents, or an electrode active material deliberately devoid of any solvents. For example, the term "dry conductive material" refers to a conductive material deliberately not in contact with solvents, or a conductive material deliberately devoid of any solvents. For example, the term "dry binder" refers to a binder deliberately not in contact with solvents, or a binder deliberately devoid of any solvents. For example, a binder that does not mix with solvent and is liquid at room temperature may be referred to as dry binder.

"Group" refers to a group in the Periodic Table of Elements according to the 1-18 Group numbering system by the International Union of Pure and Applied Chemistry ("IUPAC").

The term "particle diameter" as used herein refers to an average particle diameter if the particle is spherical, and refers to an average major axis length if the particle is non-spherical. The particle diameter may be measured utilizing a particle size analyzer (PSA). The term "particle diameter" refers to an average particle diameter, for example. The term "average particle diameter" refers to, for example, a median particle diameter (D50).

D50 may refer to the average diameter (or size) of particles whose cumulative volume corresponds to 50 vol% in the particle size distribution (*e.g.*, cumulative distribution), and may refer to the value of the particle size corresponding to 50% from the smallest particle when the total number of particles is 100% in the distribution curve accumulated in the order of the smallest particle size to the largest particle size as measured, for example, by a laser diffraction method.

D90 may refer to the average diameter (or size) of particles whose cumulative volume corresponds to 90 vol% in the particle size distribution (*e.g.*, cumulative distribution), and may refer to the value of the particle size corresponding to 90% from the smallest particle when the total number of particles is 100% in the distribution curve accumulated in the order of the smallest particle size to the largest particle size as measured, for example, by a laser diffraction method.

D10 may refer to the average diameter (or size) of particles whose cumulative volume corresponds to 10 vol% in the particle size distribution (*e.g.*, cumulative distribution), and may refer to the value of the particle size corresponding to 10% from the smallest particle when the total number of particles is 100% in the distribution curve accumulated in the order of the smallest particle size to the largest particle size as measured, for example, by a laser diffraction method.

The "aspect ratio" used herein may refer to the average aspect ratio and may be determined from SEM images.

As used herein, the term "metal" refers to both metals and metalloids such as silicon and germanium, in an elemental or ionic state.

As used herein, the term "alloy" refers to a mixture of two or more metals.

The term "electrode active material" as used herein refers to an electrode material capable of undergoing lithiation and delithiation.

As used herein, the term "cathode active material" refers to a cathode material capable of undergoing lithiation and delithiation.

As used herein, the term "anode active material" refers to an anode material capable of undergoing lithiation and delithiation.

As used herein, the terms "lithiation" and "to lithiate" refer to a process of adding lithium to an electrode active material.

As used herein, the terms "delithiation" and "to delithiate" refer to a process of removing lithium from an electrode active material.

As used herein, the term "charging" or "to charge" refers to a process of providing electrochemical energy to a battery.

As used herein, the term "discharging" or "discharge" refers to a process of removing electrochemical energy from a battery.

As used herein, the terms "positive electrode" and "cathode" refer to an electrode at which electrochemical reduction and lithiation take place during a discharging process.

As used herein, the terms "negative electrode" and "anode" refer to an electrode at which electrochemical oxidation and delithiation take place during a discharging process.

As utilized herein, the terms "fibrillized" and "fibrillize" refer to a process of converting (e.g., by grinding or pulverizing) particulates of a substance into fibrous shape (*i.e.*, fibrils) of said substance that has higher aspect ratio than the particulates.

While specific examples are described herein, there may be alternatives, modifications, variations, improvements, and substantial equivalents of the examples disclosed herein, including those that are presently unforeseen or unappreciated, that may arise from applicants or those skilled in the art. Accordingly, the appended claims as filed and as they can be amended are intended to embrace all such alternatives, modifications, variations, improvements and substantial equivalents.

Hereinbelow, a dry electrode film according to one or more embodiments, and a dry electrode and a lithium battery including the same, will be described in greater detail.

A dry electrode film according to one or more embodiments includes: a dry electrode active material; a dry binder; and a nitrogen-containing anion, a nitrile group-containing compound, or a combination (*e.g.*, any suitable combination) thereof, wherein the dry electrode active material includes: a core; and a shell conforming to a surface of the core, the shell includes: at least one first metal oxide; and a first carbonaceous material, wherein the first metal oxide is disposed in a matrix of the first carbonaceous material, the first metal oxide is represented by $M_aO_b$ ($0<a\leq3$ and $0<b<4$, wherein if (*e.g.*, when) a is 1, 2, or 3, b is not an integer), and M is at least one metal of (*e.g.*, one metal selected from among) Groups 2 to 16 of the Periodic Table of Elements (e.g., at least one metal selected from among Groups 2 to 13, Group 15, and/or Group 16 of the Periodic Table of Elements; or at least one metal selected from Group 13 of the Periodic Table of Elements).

Because the dry electrode film includes a nitrogen-containing anion, a nitrile group-containing compound, or a combination (*e.g.*, any suitable combination) thereof, the charge transfer resistance of the dry electrode film may decrease. For example, because the dry electrode film contains a nitrogen-containing anion and/or a nitrile group-containing compound, the interfacial resistance between the dry electrode film and the electrolyte may decrease. For example, because the dry electrode film contains a nitrogen-containing anion and/or a nitrile group-containing compound, a more electrochemically stable solid electrolyte layer may form at the interface between the dry electrode film and the electrolyte. For example, because the dry electrode film contains a nitrogen-containing anion and/or a nitrile group-containing compound, during charging and discharging of a lithium battery including the dry electrode film, effective reduction or inhibition of an increase in the interfacial resistance between the dry electrode film and the electrolyte may be achieved. Therefore, even if (*e.g.*, when) the thickness of the dry electrode film increases, an increase in the internal resistance of the lithium battery may be more effectively inhibited or reduced. Therefore, a dry electrode and a lithium battery, including the dry electrode film, may have improved cycling performance, for example, high-rate capability.

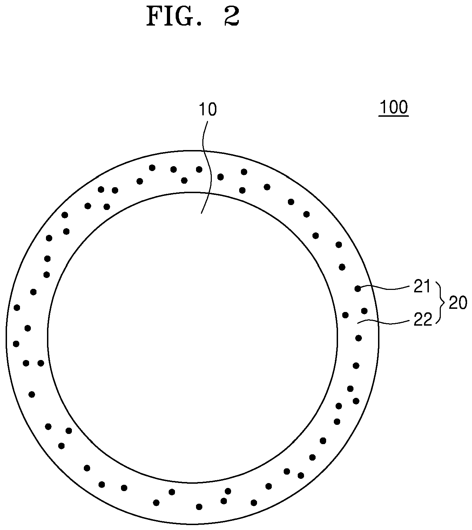

Referring to FIG. 2, a dry electrode active material 100 may include a core 10 and a shell 20 continuously or discontinuously conforming to a surface of the core 10. The shell 20 may completely or partially cover the core 10. The shell 20 may include a first metal oxide 21 and a first carbonaceous material 22. The dry electrode active material may be, for example, an electrode active material that does not get impregnated, dissolved, or dispersed in a processing solvent during the manufacturing process of a dry electrode film. The dry electrode active material may be, for example, an electrode active material that does not contain processing solvent and does not come in contact with processing solvent during the manufacturing process of a dry electrode film. Because the dry electrode active material has a core/shell structure and the shell includes a first carbonaceous material, the dry electrode active material and the dry binder may be more uniformly mixed. As a result, agglomeration of the dry binder in the dry electrode film may be suppressed or reduced, and the dry binder may be three-dimensionally uniformly (or substantially uniformly) distributed. Because local resistive regions are suppressed or reduced in the dry electrode film, an imbalance in electrical current density may decrease, and the internal resistance of the dry electrode film may globally decrease. Because the dry electrode active material has a core/shell structure and the shell includes a first carbonaceous material, the interfacial resistance between the dry electrode active material particles and the dry electrode active material (*e.g.*, an interfacial resistance between adjacent dry electrode active material particles) may decrease. Because the dry electrode active material has a core/shell structure and the shell includes a first carbonaceous material, the interfacial resistance of the dry electrode film may decrease. Because the dry electrode active material has a core/shell structure and the shell includes a first carbonaceous material, improvement in adhesion between the dry electrode active material and the dry binder may be achieved. Because the dry electrode active material has a core/shell structure and the shell includes a first carbonaceous material, mechanical properties, *e.g.*, tensile strength, of the dry electrode film may improve. Because the dry electrode film has decreased internal resistance and improved mechanical properties, a lithium battery including the dry electrode film may have improved cycling performance. Because the shell includes a first metal oxide, the shell may have improved ionic conductivity than the shell composed of carbonaceous material, and as a result, the ionic conductivity of the dry electrode active material may also improve.

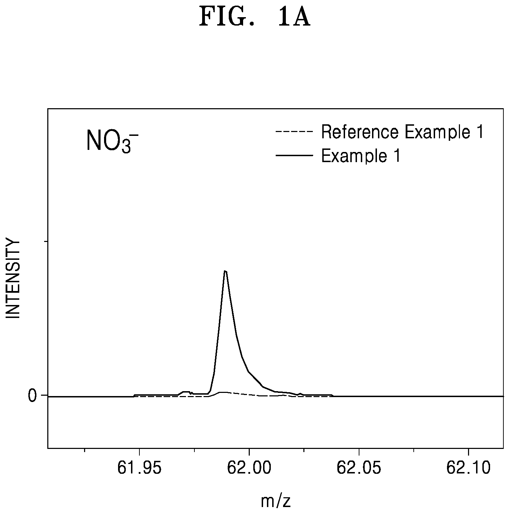

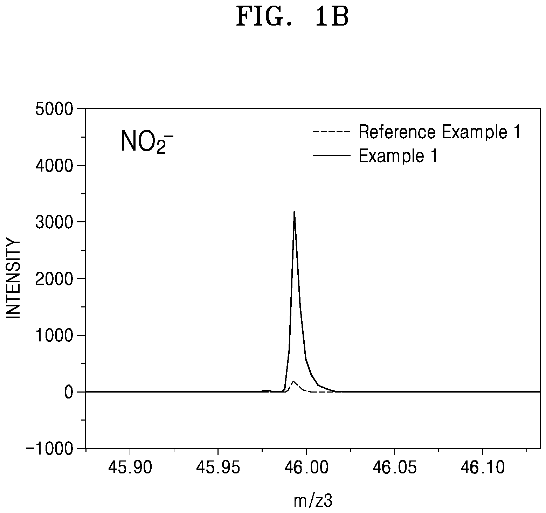

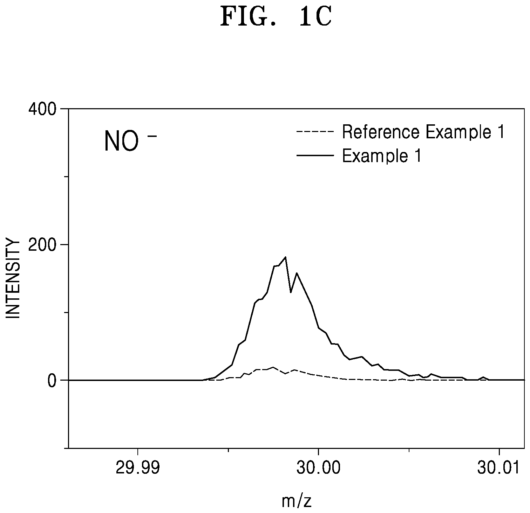

The dry electrode film may include nitrogen-containing anions, and the nitrogen-containing anions may include, for example, $NO_3^-$, $NO_2^-$, $NO^-$, or any suitable combination thereof. Because the dry electrode film includes $NO_3^-$, $NO_2^-$; $NO^-$, or any suitable combination thereof, a decrease in the interfacial resistance between the dry electrode film and the electrolyte may be more effectively achieved. Referring to FIGs. 1A to 1C, by mass spectrometry of the dry electrode film, the nitrogen-containing anions may show a peak corresponding to $NO_3^-$, a peak corresponding to $NO_2^-$, a peak corresponding to $NO^-$, or a combination of the peaks thereof. The presence of nitrogen-containing anions may be confirmed through mass spectrometry of the dry electrode film.

The dry electrode film may be measured for charge transfer resistance ($R_{ct}$), for example, by electrochemical impedance spectroscopy. Using Arrhenius equations in Equation 1 and Equation 1A, an $\ln(1/R_{ct})$ vs. $1/T$ graph may be plotted from temperature-dependent charge transfer resistance data, and from the slope ($-E_a/R$) of this graph, charge transfer activation energy ($E_a$) may be derived. The charge transfer activation energy ($E_a$) may be 15 KJ/mol or less, 14 KJ/mol or less, 13 KJ/mol or less, 12 KJ/mol or less, or 11 KJ/mol or less. For example, the charge transfer activation energy ($E_a$) may be about 1 KJ/mol to about 15 KJ/mol, about 2 KJ/mol to about 14 KJ/mol, about 3 KJ/mol to about 13 KJ/mol, about 4 KJ/mol to about 12 KJ/mol, or about 5 KJ/mol to about 11 KJ/mol. Because the dry electrode film has such a low charge transfer activation energy in the above ranges, the interfacial resistance between the dry electrode film and the electrolyte may decrease.

### Equation 1

$$1/R_{ct} = A \exp (-E_a/RT)$$

### Equation 1A

$$\ln(1/R_{ct}) = \ln A - (E_a/R)*(1/T)$$

In the above equations, $R_{ct}$ represents charge transfer resistance, A represents pre-exponential factor, $E_a$ represents charge transfer activation energy, R represents the gas constant, and T represents absolute temperature.

The capacity per unit area of the dry electrode film may be, for example, more than 8.0 mA/cm$^2$, 8.5 mAh/cm$^2$ or more, 9.0 mAh/cm$^2$ or more, 9.5 mAh/cm$^2$ or more, 10.0 mAh/cm$^2$ or more, or 11 mAh/cm$^2$ or more. The capacity per unit area of the dry electrode film may be, for example, more than 8.0 mAh/cm$^2$ to about 40 mAh/cm$^2$, about 8.5 mAh/cm$^2$ to about 40 mAh/cm$^2$, about 9.0 mAh/cm$^2$ to about 35 mAh/cm$^2$, about 9.5 mAh/cm$^2$ to about 30 mAh/cm$^2$, about 10.0 mAh/cm$^2$ to about 25 mAh/cm$^2$, or about 11 mAh/cm$^2$ to about 20 mAh/cm$^2$. Because the dry electrode film has such a high capacity per unit area in the above ranges, the energy density of a lithium battery including the dry electrode film may improve. As the thickness of the dry electrode film increases, the capacity per unit area of the dry electrode film may increase.

Because the dry electrode film includes a nitrogen-containing anion, a nitrile group-containing compound, or any suitable combination thereof, despite increased capacity per unit area of the dry electrode film, a rapid increase in charge transfer resistance ($R_{ct}$) may be suppressed or reduced. Therefore, the difference between charge transfer resistance ($R_{ct}$) and ion resistance ($R_{ion}$) in the dry electrode film as measured at 25 °C by electrochemical impedance spectroscopy may be 10 ohm·cm$^2$ or less, 8 ohm·cm$^2$ or less, 6 ohm·cm$^2$ or less, or 4 ohm·cm$^2$ or less. Because the difference between charge transfer resistance ($R_{ct}$) and ion resistance ($R_{ion}$) in the dry electrode film is limited to the above ranges, despite increased capacity per unit area of the dry electrode film, deterioration in the cycling performance of a lithium battery including the dry electrode film may be suppressed or reduced. Between a charge transfer resistance ($R_{ct}$) and an ion resistance ($R_{ion}$) of the dry electrode film as measured by electrochemical impedance spectroscopy, for example, the charge transfer resistance ($R_{ct}$) may be more than the ion resistance ($R_{ion}$). The difference between charge transfer resistance ($R_{ct}$) and ion resistance ($R_{ion}$) in the dry electrode film as measured by electrochemical impedance spectroscopy may be, for example, about 1 ohm·cm$^2$ to about 10 ohm·cm$^2$, about 1 ohm·cm$^2$ to about 8 ohm·cm$^2$, about 1 ohm·cm$^2$ to about 6 ohm·cm$^2$, or about 1 ohm·cm$^2$ to about 4 ohm·cm$^2$.

The dry electrode film may include, for example, a first lithium salt compound. The first lithium salt compound may be, for example, a salt compound including a lithium cation and a nitrogen-containing anion. In one or more embodiments, the nitrogen-containing anion may be derived from the first lithium salt compound. For example, the nitrogen-containing anion may be present as a first lithium salt in the dry electrode film.

The amount of the first lithium salt compound may be, for example, about 0.1 wt% to about 3 wt%, about 0.1 wt% to about 2.5 wt%, about 0.1 wt% to about 2 wt%, about 0.1 wt% to about 1.5 wt%, or about 0.1 wt% to about 1 wt% (e.g. about 0.2 wt% to about 0.8 wt%, about 0.3 wt% to about 0.5 wt%, or about 0.3 wt% to about 0.4 wt%), with respect to the total weight of the dry electrode film. Because the dry electrode film includes the first lithium salt compound in the above ranges, the internal resistance of a lithium battery including the dry electrode film may decrease more effectively, and the cycling performance of the lithium battery may further improve. If (e.g., when) the amount of the first lithium salt compound is excessively small, the effect thereof may be negligible. If (e.g., when) the amount of the first lithium salt compound is excessively high, anions derived from the first lithium salt may cover the anode within the lithium battery, which results in an increased internal resistance of the lithium battery and deteriorates the cycling performance of the lithium battery. The first lithium salt compound may be, for example, LiNOs. Because the dry electrode film includes LiNOs, the internal resistance of a lithium battery including the dry electrode film may further decrease, and the cycling performance of the lithium battery may further improve.

The dry electrode film may further include, for example, a second lithium salt compound. The second lithium salt compound may also be referred to as, for example, a lithium-containing compound. Because the dry electrode film additionally includes a second lithium salt compound, the cycling performance of a lithium battery including the dry electrode film may further improve. Because the dry electrode film additionally includes a second lithium salt compound, a decrease in the initial capacity of a lithium battery due to irreversible reactions occurring upon charging and discharging of the lithium battery may be effectively prevented or reduced. For example, the second lithium salt compound may be irreversibly oxidized or degraded during initial charging. For example, the second lithium salt compound may have a lower initial charge-discharge efficiency relative to the dry cathode active material. For example, the initial charge-discharge efficiency of the second lithium salt compound may be 50 % or less, 40 % or less, 30 % or less, 20 % or less, or 10 % or less, with respect to the initial charge-discharge efficiency of the dry cathode active material. Lithium ions derived from the second lithium salt compound may be utilized in irreversible reactions e.g., formation of solid electrolyte layers on the anode surface during initial charging. Because the dry electrode film additionally includes the second lithium salt compound, lithium ions consumed in such irreversible reactions during initial charging may be mostly the lithium ions derived from the second lithium salt compound, while lithium ions derived from the dry electrode active materials remain unused. For example, the dry electrode film may retain its design capacity, despite side reactions during initial charging and discharging of the lithium battery. Therefore, a lithium battery including the dry electrode film may be protected from a capacity decrease due to initial irreversible reactions in the lithium battery. For example, the second lithium salt compound may include $LiNO_2$, $Li_2O$, $Li_2S$, $Li_3N$, $LiF$, $Li_5FeO_4$, $Li_2NiO_2$, $Li_6CO_4$, $Li_2MoO_3$, or any suitable combination thereof.

The amount of the second lithium salt compound may be, for example, about 0.1 wt% to about 5 wt%, about 0.1 wt% to about 3 wt%, or about 0.1 wt% to about 2 wt%, with respect to the total weight of the dry electrode film. With the second lithium salt compound in an amount within the above ranges, a decrease in the initial capacity of a lithium battery including the dry electrode film may be more effectively suppressed or reduced.

The dry electrode film may include a nitrile group-containing compound, and because the dry electrode film including a nitrile group-containing compound, a lithium battery including the dry electrode film may have decreased internal resistance as well as improved high-temperature stability of the lithium battery. For example, with the dry electrode film including a nitrile group-containing compound, thickness changes of the lithium battery may be reduced during high-temperature charging and discharging of the lithium battery.

The amount of the nitrile group-containing compound may be, for example, about 0.1 wt% to about 3 wt%, about 0.1 wt% to about 2.5 wt%, about 0.1 wt% to about 2 wt%, about 0.1 wt% to about 1.5 wt%, or about 0.1 wt% to about 1 wt% (e.g. about 0.2 wt% to about 0.8 wt%, about 0.5 wt% to about 0.7 wt%, or about 0.6 wt% to about 0.7 wt%), with respect to the total weight of the dry electrode film. Because the dry electrode film includes the nitrile group-containing compound in the above ranges, the internal resistance of a lithium battery including the dry electrode film may decrease more effectively, and the cycling performance of the lithium battery may further improve. If (e.g., when) the amount of the nitrile group-containing compound is excessively small, the effect thereof may be negligible. If (e.g., when) the amount of the nitrile group-containing compound is excessively high, the nitrile group-containing compound covers the anode within the lithium battery, and as a result, the internal resistance of the lithium battery may increase, and the cycling performance of the lithium battery may deteriorate.

The nitrile group-containing compound may be a compound containing, for example, two or more nitrile groups. The number of nitrile groups in the nitrile group-containing compound may be, for example, about 2 to about 9, about 2 to about 7, about 2 to about 5, about 2 to about 3, or may be about 2. With the nitrile group-containing compound containing two or more nitrile groups, a lithium battery including the dry electrode film may have further improved cycling performance and further improved high-temperature stability. The nitrile group-containing compound may be a nitrile group-containing organic compound. The nitrile group-containing compound may include, for example, succinonitrile, adiponitrile, pentane-1,2,3-tricyanide (i.e., 1,2,3-pentantricarbonitrile), pentane-1,2,5-tricyanide (i.e., 1,2,5-pentantricarbonitrile), hexane-1,2,6-tricyanide (i.e., 1,2,6-hexanetricarbonitrile), hexane-1,3,6-tricyanide (i.e., 1,3,6-hexanetricarbonitrile), or any suitable combination thereof. The nitrile group-containing compound may be succinonitrile.

The dry electrode film may have a core-shell structure, and the shell may continuously or discontinuously conform to a surface of the core. With the shell including the first metal oxide disposed in the matrix of the first carbonaceous material, the shell may be more uniformly (substantially more uniformly) disposed on the core. For example, by being incorporated onto the core through a composite that includes the first metal oxide disposed in the matrix of the first carbonaceous material, the shell may be more uniformly (substantially more uniformly) disposed on the core without agglomeration. As the shell uniformly (substantially uniformly) disposed on the core effectively prevents the core and electrolyte from coming into contact with each other, side reactions due to a contact between the core and the electrolyte may be prevented or reduced. Further, as cation mixing due to a contact between the core and the electrolyte is inhibited or reduced, resistance layers may be less likely to form on the surface of the core. Further, as the shell is provided on the core, elution of transition metal ions from the core including a transition metal may be inhibited or reduced. The first carbonaceous material may be, for example, a crystalline carbonaceous material. The first carbonaceous material may be, for example, a carbonaceous nanostructure. The first carbonaceous material may be, for example, a carbonaceous two-dimensional nanostructure. For example, the first carbonaceous material may be graphene. For example, as the shell including graphene and/or a matrix thereof has flexibility, volume changes of the dry electrode active material may be easily accommodated during charging and discharging, such that crack formation inside the dry electrode active material may be inhibited or reduced. Due to high electronic conductivity of graphene, the interfacial resistance between the dry electrode active material and the electrolyte may decrease. Thus, despite the shell including graphene being introduced, an increase in the internal resistance of a lithium battery may be inhibited or reduced. For example, because a carbonaceous material in the related art not containing first metal oxides easily agglomerates, substantially uniform disposition on the cores of the dry electrode active material may be difficult. Because the matrix of the first carbonaceous material is derived from, for example, a graphene matrix, the first carbonaceous material has lower density and higher porosity relative to the carbonaceous material derived from graphitic material in the related art.

The dry electrode active material may have a core/shell structure. The shell may include a first metal oxide, and examples of a metal including the first metal oxide may be at least one of (*e.g.*, at least one selected from among) Al, Nb, Mg, Sc, Ti, Zr, V, W, Mn, Fe, Co, Pd, Cu, Ag, Zn, Sb, and/or Se. The first metal oxide may be, for example, at least one of (*e.g.*, at least one selected from among) $Al_2O_z$ (0<z<3), $NbO_x$ (0<x<2.5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnO_x$ (0<x<1), $Sb_2O_z$ (0<z<3), and/or $SeO_y$ (0<y<2). As the first metal oxide is disposed inside the matrix of the first carbonaceous material, uniformity (substantial uniformity) of the shell disposed on the core may improve, and high-voltage resistance of the dry electrode active material may further improve. For example, the shell may include $Al_2O_x$ (0<x<3) as the first metal oxide.

The shell may further include at least one second metal oxide. The second metal oxide may be represented by $M_aO_c$ (0<a≤3 and 0<c≤4, wherein if (*e.g.*, when) a is 1, 2, or 3, c is an integer) wherein M is at least one metal of (*e.g.*, at least one metal selected from among) Groups 2 to 16 of the Periodic Table of the Elements, for example, Groups 2 to 13, Group 15, and/or Group 16 of the Periodic Table of Elements (e.g., at least one metal selected from Group 13 of the Periodic Table of Elements). For example, the second metal oxide may include the same metal as the first metal oxide. The ratio c/a of c to a in the second metal oxide may have a greater value than the ratio b/a of b to a in the at least one first metal oxide. For example, c/a > b/a may be satisfied. The second metal oxide may be disposed within the matrix of the first carbonaceous material. For example, the second metal oxide may be (e.g., may be selected from among) $Al_2O_3$, $NbO$, $NbO_2$, $Nb_2O_3$, $MgO$, $Sc_2O_3$, $TiO_2$, $ZrO_2$, $V_2O_3$, $WO_2$, $MnO_2$, $Fe_2O_3$, $Co_3O_4$, $PdO$, $CuO$, $AgO$, $ZnO$, $Sb_2O_3$, and/or $SeO_2$. The first metal oxide may be, for example, a reduction product of the second metal oxide. The first metal oxide may be obtained from a partial or complete reduction of the second metal oxide. Therefore, the first metal oxide may have a lower oxygen content (*e.g.*, amount) and a lower oxidation number of the metal, relative to the second metal oxide. For example, the shell may include $Al_2O_x$ (0<x<3) as the first metal oxide, and $Al_2O_3$ as the second metal oxide

The shell may include, for example, at least one of (*e.g.*, at least one selected from among) the first metal oxide and/or the second metal oxide. The at least one of (*e.g.*, at least one selected from among) the first metal oxide and/or the second metal oxide may have a particle diameter (e.g. average particle diameter, such as D50) of, for example, about 0.1 nm to about 100 nm, about 0.5 nm to about 100 nm, about 1 nm to about 100 nm, about 1 nm to about 50 nm, about 1 nm to about 30 nm, about 5 nm to about 30 nm, or about 10 nm to about 30 nm. With the first metal oxide and/or the second metal oxide having a particle diameter in the above nano-size ranges, the first metal oxide and/or the second metal oxide may be more uniformly (substantially more uniformly) distributed within the matrix of the first carbonaceous material. If (*e.g.*, when) the particle diameter of at least one of the first metal oxide and/or the second metal oxide excessively increases, the thickness of the shell increases, which may result in an increase in the internal resistance of a composite anode active material. If (*e.g.*, when) the particle diameter of at least one of the first metal oxide and/or the second metal oxide excessively decreases, substantially uniform dispersion may be difficult.

The shell may include the first metal oxide and/or the second metal oxide and may include the first carbonaceous material. The first carbonaceous material may be disposed in a direction protruding from the surface of the first metal oxide and/or the second metal oxide. The first carbonaceous material may be disposed in a direction protruding from the surface of the first metal oxide and/or the second metal oxide by directly growing from the surface of the first metal oxide and/or the second metal oxide. The first carbonaceous material disposed in a direction protruding from the surface of the first metal oxide and/or the second metal oxide may be, for example, a two-dimensional carbonaceous nanostructure, a carbonaceous flake, or graphene.

The shell may have a thickness of, for example, about 0.1 nm to about 5 $\mu$m, about 0.5 nm to about 5 $\mu$m, about 1 nm to about 5 $\mu$m, about 1 nm to about 1 $\mu$m, about 1 nm to about 500 nm, about 1 nm to about 200 nm, about 1 nm to about 100 nm, about 1 nm to about 50 nm, about 1 nm to about 30 nm, or about 1 nm to about 20 nm. With the shell having a thickness in the above ranges, a dry electrode including the dry electrode active material may have further improved electronic conductivity and further decreased internal resistance.

The shell may have a monolayer structure or a multilayer structure. The multilayer structure may have, for example, a two-layer structure, a three-layer structure, or a four-layer structure. In the multilayer structure, the type or kind of metal in the first metal oxide that each layer contains may be different from each other.

For example, the amount of the shell may be about 0.01 wt% to about 5 wt%, about 0.01 wt% to about 3 wt%, about 0.01 wt% to about 2 wt%, or about 0.01 wt% to about 1 wt% (e.g. about 0.1 wt% to about 0.5 wt%. or about 0.2 wt% to about 0.4 wt%), with respect to the total weight of dry electrode active material. The amount of the first metal oxide may be, for example, about 0.006 wt% to about 3 wt%, about 0.006 wt% to about 1.8 wt%, about 0.006 wt% to about 1.2 wt%, or about 0.006 wt% to about 0.6 wt% (e.g. about 0.06 wt% to about 0.3 wt%, or about 0.12 wt% to about 0.24 wt%), with respect to the total weight of dry electrode active material. As the dry electrode active material includes the shell and the first metal oxide in an amount in the above ranges, respectively, the cycling performance of a lithium battery may further improve.

For example, the dry electrode active material may further include a third metal doped on a core, or a third metal oxide coated on the core. Further, the shell may be disposed on the third metal doped on the core or on the third metal oxide coated on the core. For example, the shell may be disposed on the third metal and/or the third metal oxide, after the third metal is doped on the surface of a compound, *e.g.*, a lithium transition metal oxide included in the core, or after the third metal oxide is coated on the surface of a compound, *e.g.*, a lithium transition metal oxide included in the core. The dry electrode active material may include, for example: a core; an interlayer disposed on the core; and a shell disposed on the interlayer, wherein the interlayer may include a third metal or a third metal oxide. The third metal may be at least one metal of (*e.g.*, at least one metal selected from among) Al, Zr, W, and/or Co, and the third metal oxide may be $Al_2O_3$, $Li_2O$-$ZrO_2$, $WO_2$, $CoO$, $Co_2O_3$, $Co_3O_4$, or any suitable combination thereof.

The shell conforming to the surface of the core may be, for example, a dry-coating layer. The shell may be introduced onto the core by a dry method, for example, by milling. The shell conforming to the surface of the core may include, for example, a composite that contains a first metal oxide and a first carbonaceous material, *e.g.*, graphene, and at least one of (*e.g.*, at least one selected from among) milling products of the composite. The first metal oxide may be disposed in a matrix of a first carbonaceous material, for example, a graphene matrix.

For example, the shell may be prepared from a composite that includes a first metal oxide and a first carbonaceous material, *e.g.*, graphene. The composite may further include a second metal oxide in addition to the first metal oxide. For example, the composite may include two or more types (kinds) of first metal oxides. For example, the composite may include two or more types (kinds) of first metal oxides, and two or more types (kinds) of second metal oxides.

The amount of the composite and at least one of the milling products thereof may be, for example, 5 wt% or less, 3 wt% or less, 2 wt% or less, 1 wt% or less, or 0.5 wt% or less, relative to the total weight of the dry electrode active material. The amount of at least one of the composite and a milling product thereof may be about 0.01 wt% to about 5 wt%, about 0.01 wt% to about 3 wt%, about 0.01 wt% to about 1 wt%, about 0.01 wt% to about 0.7 wt%, or about 0.01 wt% to about 0.5 wt%, with respect to the total weight of the dry electrode active material. As the dry electrode active material includes the composite and at least one of milling products thereof in an amount in the above ranges, the cycling performance of a lithium battery including the dry electrode active material may further improve.

The composite may further include at least one of (*e.g.*, at least one selected from among) a first metal oxide and/or a second metal oxide. The at least one of (*e.g.*, at least one selected from among) a first metal oxide and/or a second metal oxide may have a particle diameter (e.g. average particle diameter, such as D50) of about 0.1 nm to about 100 nm, about 0.5 nm to about 100 nm, about 1 nm to about 100 nm, about 1 nm to about 50 nm, about 1 nm to about 30 nm, about 5 nm to about 30 nm, or about 10 nm to about 30 nm. As the first metal oxide and/or the second metal oxide have a particle diameter in the above nano-size ranges, the first metal oxide and/or the second metal oxide may be more uniformly (substantially more uniformly) distributed in the matrix of the first carbonaceous material of the composite. Therefore, the composite may be uniformly coated (substantially uniformly coated) on the core without agglomeration and form a shell. Further, as the first metal oxide and/or the second metal oxide have a particle diameter in the above ranges, the first metal oxide and/or the second metal oxide may be more uniformly (substantially more uniformly) disposed on the core. Therefore, as the first metal oxide and/or the second metal oxide are uniformly (substantially uniformly) disposed on the core, high-voltage resistance may be more effectively achieved. The particle diameter of the first metal oxide and/or the second metal oxide may be measured, for example, by utilizing a measurement device utilizing a laser diffraction technique or a dynamic light scattering technique. The particle diameter may be measured by, for example, a laser scattering particle size distribution analyzer (*e.g.*, LA-920 manufactured by HORIBA) and is a volume-based median particle diameter (D50) at a cumulative percentage of 50 % from the smallest particle size. The uniformity (substantial uniformity) of at least one selected from among the first metal oxide and/or the second metal oxide may have a deviation of 3 % or less, 2 % or less, or 1 % or less. The uniformity (substantial uniformity) may be measured, for example, by XPS. Therefore, the at least one of (*e.g.,* at least one selected from among) the first metal oxide and/or the second metal oxide may be uniformly (substantially uniformly) distributed within the composite with a deviation of 3 % or less, 2 % or less, or 1 % or less.

The composite may include a first carbonaceous material. For example, the first carbonaceous material may have a branched structure, and at least one metal oxide of (*e.g.*, at least one metal oxide selected from among) the first metal oxide and/or the second metal oxide may be distributed in the branched structure of the first carbonaceous material. The branched structure of the first carbonaceous material may include, for example, a plurality of first carbonaceous material particles in contact with one another. As the first carbonaceous material has such a branched structure, one or more suitable conduction paths may be provided. For example, the first carbonaceous material may be a graphene. For example, the graphene may have a branched structure, and at least one metal oxide of (*e.g.*, at least one metal oxide selected from among) the first metal oxide and/or the second metal oxide may be distributed within the branched structure of the graphene. The branched structure of the graphene may include, for example, a plurality of graphene particles in contact with one another. As the graphene has such a branched structure, one or more suitable conduction paths may be provided.

The first carbonaceous material may have, for example, a spherical structure, and at least one metal oxide of (*e.g.*, at least one metal oxide selected from among) the first metal oxide and/or the second metal oxide may be distributed in the spherical structure. The spherical structure of the first carbonaceous material may have a size of about 50 nm to about 300 nm. A plurality of particles of the first carbonaceous material (e.g., in a form of particles) having (each having) a spherical structure may be provided. As the first carbonaceous material has a spherical structure, the composite may have a secure structure. For example, the first carbonaceous material may be a graphene. For example, the graphene may have a spherical structure, and at least one metal oxide of (*e.g.*, at least one metal oxide selected from among) the first metal oxide and/or the second metal oxide may be distributed within the spherical structure. The spherical structure of the graphene may have a size of about 50 nm to about 300 nm. A plurality of graphene particles having (each having) a spherical structure may be provided. As the graphene has a spherical structure, the composite may have a secure structure.

The first carbonaceous material may have, for example, a spiral structure in which a plurality of spherical structures are connected, and at least one metal oxide of (*e.g.*, at least one metal oxide selected from among) the first metal oxide and/or the second metal oxide may be distributed within the spherical structures of the spiral structure. The spiral structure of the first carbonaceous material may have a size of about 500 nm to about 100 $\mu$m. As the first carbonaceous material has a spiral structure, the composite may have a secure structure. For example, the first carbonaceous material may be graphene. The graphene may have, for example, a spiral structure in which a plurality of spherical structures are connected, and at least one metal oxide of (*e.g.*, at least one metal oxide selected from among) the first metal oxide and/or the second metal oxide may be distributed within the spherical structures of the spiral structure. The spiral structure of the graphene may have a size of about 500 nm to about 100 $\mu$m. As the graphene has a spiral structure, the composite may have a secure structure.

The first carbonaceous material may have, for example, a cluster structure (e.g., a secondary particle) in which a plurality of spherical structures (e.g., a plurality of primary particles) are agglomerated, and at least one metal oxide of (*e.g.*, at least one metal oxide selected from among) the first metal oxide and/or the second metal oxide may be distributed within the spherical structures of the cluster structure. The cluster structure of the first carbonaceous material may have a size of about 0.5 mm to about 10 cm. As the first carbonaceous material has a cluster structure, the composite may have a secure structure. For example, the first carbonaceous material may be graphene. The graphene may have, for example, a cluster structure in which a plurality of spherical structures are agglomerated, and at least one metal oxide of (*e.g.*, at least one metal oxide selected from among) the first metal oxide and/or the second metal oxide may be distributed within the spherical structures of the cluster structure. The cluster structure of the graphene may have a size of about 0.5 mm to about 10 cm. As the graphene has a cluster structure, the composite may have a secure structure.

The composite may have, for example, a crumpled faceted-ball structure, and at least one of (*e.g.*, at least one metal oxide selected from among) the first metal oxide and/or the second metal oxide may be distributed inside the structure or on the surface of the structure. As the composite is such a faceted-ball structure, the composite may be easily coated on surface irregularities of the core.

The composite may be or have a planar structure, and at least one of (*e.g.*, at least one metal oxide selected from among) the first metal oxide and/or the second metal oxide may be distributed inside or on the surface of the structure. As the composite has a two-dimensional planar structure, the composite may be easily applied on surface irregularities of the core.

The first carbonaceous material may extend from the first metal oxide by a distance of 10 nm or less, and may include at least 1 to 20 carbonaceous material layers. For example, as a plurality of first carbonaceous material layers are stacked, the first carbonaceous material having a total thickness of 12 nm or less may be disposed on the first metal oxide. For example, the total thickness of the first carbonaceous material may be about 0.6 nm to about 12 nm. For example, the first carbonaceous material may be a graphene. The graphene may extend from the first metal oxide by a distance of 10 nm or less, and may include at least 1 to about 20 graphene layers. For example, as a plurality of graphene layers are stacked, graphene having a total thickness of 12 nm or less may be disposed on the first metal oxide. For example, the total thickness of the graphene may be about 0.6 nm to about 12 nm.

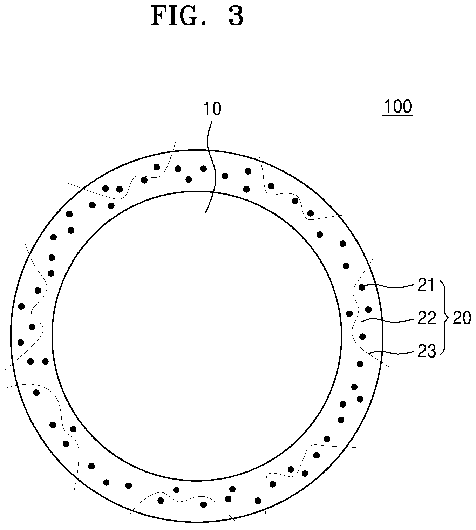

For example, the shell may further include a second carbonaceous material distinguished from the first carbonaceous material. The shell may include, for example, a fibrous carbon having an aspect ratio of 10 or more, as a second carbonaceous material. As a result, the conduction path in the dry electrode active material may be further elongated. By forming a three-dimensional conductive network between a plurality of composite cathode active materials, the second carbonaceous material may reduce the internal resistance of a dry electrode that includes the dry electrode active material. As the fibrous carbon is fixed on the dry electrode active material, a substantially uniform and stable three-dimensional conductive network may be formed between the plurality of dry electrode active materials. Thus, as the dry electrode active material includes the second carbonaceous material, a lithium battery provided with the dry electrode active material may have improved high-rate capability. It can be difficult to form a substantially uniform three-dimensional conductive network among a plurality of core particles by utilizing a simple mixture of the core and the second carbonaceous material, which is fibrous carbon, due to agglomeration of fibrous carbon and/or the like. In one or more embodiments, a second carbonaceous material 23 may be disposed on a surface of the dry electrode active material 100, as shown, for example, in FIG. 3.

Referring to FIG. 3, the dry electrode active material 100 may include a core 10, and a shell 20 continuously or discontinuously conforming to a surface of the core 10. The shell 20 may completely or partially cover the core 10. The shell 20 may include a first metal oxide 21, a first carbonaceous material 22, and a second carbonaceous material 23. The second carbonaceous material 23 may protrude from a surface of the dry electrode active material 100. The second carbonaceous material 23 may effectively provide a conductive network among a plurality of dry electrode active material particles. As the second carbonaceous material 23 is disposed in the matrix of the first carbonaceous material 22, the second carbonaceous material 23 may be easily coated on the core 10. The matrix of the first carbonaceous material 22 may act as a binder that binds the core and the second carbonaceous material 23 together. Therefore, the absence of the matrix of the first carbonaceous material 22 may make coating of the second carbonaceous material 23 on the core 10 difficult, or may cause the second carbonaceous material 23 to easily delaminate from the core 10 during the cathode slurry preparation process. If (*e.g.,* when) a binder is added to bind a lithium transition metal oxide core 10 and the second carbonaceous material 23, as the core 10 is covered with an insulating binder, the internal resistance of the dry electrode active material 100 may increase. If (*e.g.,* when) the core covered with the binder and the second carbonaceous material are subjected to a high-temperature heat treatment to carbonize the binder, the core 10 and the second carbonaceous material 23 may degrade during the heat treatment.

The second carbonaceous material may have an aspect ratio of 10 or more, or 20 or more. For example, the second carbonaceous material may have an aspect ratio of about 10 to about 100,000, about 10 to about 80,000, about 10 to about 50,000, about 10 to about 10,000, about 10 to about 5,000, about 10 to about 1,000, about 10 to about 500, about 10 to about 100, or about 10 to about 50. The aspect ratio of the second carbonaceous material is, for example, a ratio of length (e.g. average length) of the major axis passing through the center of the second carbonaceous material to length (e.g. average length) of the minor axis that is perpendicular to the major axis, wherein the major axis passes through the second carbonaceous material and the center of the second carbonaceous material, and the minor axis is perpendicular to the major axis is a diameter of the second carbonaceous material. The aspect ratio and the lengths (e.g. average lengths) of the major and minor axes may be determined from SEM images.

For example, the second carbonaceous material may have a diameter (e.g. average diameter) of 50 nm or less, 30 nm or less, 20 nm or less, or 10 nm or less. For example, the second carbonaceous material may have a diameter (e.g. average diameter) of about 1 nm to about 50 nm, about 1 nm to about 30 nm, or about 1 nm to about 10 nm. The diameter (e.g. average diameter) of the second carbonaceous material may be determined from SEM images. If (*e.g.*, when) the diameter of the second carbonaceous material is excessively large, the absolute number of filaments per unit volume decreases and thus, the effect of reducing the internal resistance may become insignificant. If (*e.g.,* when) the diameter of the second carbonaceous material is excessively small, substantially uniform dispersion may be difficult.

For example, the second carbonaceous material may have a length (e.g. average length) of 1,000 $\mu$m or less,

100 µm or less, 50 µm or less, 10 µm or less, 5 µm or less, 2 µm or less, 1 µm or less, 500 nm or less, or 300 nm or less. For example, the second carbonaceous material may have a length (e.g. average length) of about 100 nm to about 1,000 µm, about 100 nm to about 500 µm, about 100 nm to about 100 µm, about 100 nm to about 50 µm, about 100 nm to about 10 µm, about 100 nm to about 5 µm, about 100 nm to about 2 µm, about 100 nm to about 1 µm, about 100 nm to about 500 nm, or about 100 nm to about 300 nm. For example, the second carbonaceous material may have a length (e.g. average length) of about 500 nm to about 1,000 µm, about 500 nm to about 500 µm, about 500 nm to about 100 µm, about 500 nm to about 50 µm, about 500 nm to about 10 µm, about 500 nm to about 5 µm, or about 500 nm to about 2 µm. The length (e.g. average length) of the second carbonaceous material may be determined from SEM images. As the length of the second carbonaceous material increases, the internal resistance of the electrode may decrease. If (e.g., when) the length of the second carbonaceous material is excessively small, it may be difficult to provide an effective conduction path.

The second carbonaceous material may include, for example, a carbon nanofiber, a carbon nanotube, or any suitable combination thereof.

For example, the carbon nanotubes may include a primary carbon nanotube structure, a secondary carbon nanotube structure formed by agglomeration of a plurality of primary carbon nanotube particles, or any suitable combination thereof.

The primary carbon nanotube structure may be one carbon nanotube unit. The carbon nanotube unit has a graphite sheet having a cylindrical form with a nano-sized diameter and a $sp^2$ bond structure. Depending on the bending angle and structure of the graphite sheet, the characteristics of conductors, or the characteristics of semiconductors may be exhibited. The carbon nanotube unit may be classified, depending on the number of bonds constituting a wall, into a single-walled carbon nanotube (SWCNT), a double-walled carbon nanotube (DWCNT), a multi-walled carbon nanotube (MWCNT), and/or the like. The smaller the wall thickness of the carbon nanotube unit, the lower the resistance.

The primary carbon nanotube structure may include, for example, an SWCNT, a DWCNT, an MWCNT, or any suitable combination thereof. For example, the primary carbon nanotube structure may have a diameter (e.g. average diameter) of 1 nm or more, or 2 nm or more. For example, the primary carbon nanotube structure may have a diameter (e.g. average diameter) of 20 nm or less, or 10 nm or less. For example, the primary carbon nanotube structure may have a diameter (e.g. average diameter) of about 1 nm to about 20 nm, about 1 nm to about 15 nm, or about 1 nm to about 10 nm. For example, the primary carbon nanotube structure may have a length (e.g. average length) of 100 nm or more, or 200 nm or more. For example, the primary carbon nanotube structure may have a length (e.g. average length) of 2 µm or less, 1 µm or less, 500 nm or less, or 300 nm or less. For example, the primary carbon nanotube structure may have a length (e.g. average length) of about 100 nm to about 2 µm, about 100 nm to about 1 µm, about 100 nm to about 500 nm, about 100 nm to about 400 nm, about 100 nm to about 300 nm, or about 200 nm to about 300 nm. The diameter and length of the primary carbon nanotube structure may be measured from a scanning electron microscope (SEM) image or a transmission electron microscope (TEM) image. In one or more embodiments, the diameter and/or length of the primary carbon nanotube structure may be measured by a laser diffraction method.

The secondary carbon nanotube structure may be a structure formed by assembling the primary carbon nanotube structure to form a bundle type or kind or a rope type or kind, in whole or in part. The secondary carbon nanotube structure may include, for example, bundle-type or kind carbon nanotubes, rope-type or kind carbon nanotubes, or any suitable combination thereof. For example, the secondary carbon nanotube structure may have a diameter (e.g. average diameter) of 2 nm or more, or 3 nm or more. For example, the secondary carbon nanotube structure may have a diameter of 50 nm or less, 30 nm or less, 20 nm or less, or 10 nm or less. For example, the secondary carbon nanotube structure may have a diameter (e.g. average diameter) of about 2 nm to about 50 nm, about 2 nm to about 30 nm, or about 2 nm to about 20 nm. For example, the secondary carbon nanotube structure may have a length (e.g. average length) of 500 nm or more, 700 nm or more, 1 µm or more, or 10 µm or more. For example, the secondary carbon nanotube structure may have a length (e.g. average length) of 1,000 µm or less, 500 µm or less, or 100 µm or less. For example, the secondary carbon nanotube structure may have a length (e.g. average length) of about 500 nm to about 1,000 µm, about 500 nm to about 500 µm, about 500 nm to about 200 µm, about 500 nm to about 100 µm, or about 500 nm to about 50 µm. The diameter and length of the secondary carbon nanotube structure may be measured from an SEM image or an optical microscope image. The diameter and/or length of the secondary carbon nanotube structure may be measured by a laser diffraction method.

The secondary carbon nanotube structure may be utilized in the preparation of the dry electrode active material, for example, by being dispersed in a solvent and/or the like, and converted into the primary carbon nanotube structure.

The amount of the second carbonaceous material may be, for example, about 0.1 wt% to about 50 wt%, about 1 wt% to about 40 wt%, or about 5 wt% to about 30 wt%, with respect to the total weight of the first carbonaceous material and the second carbonaceous material. Including the first carbonaceous material and the second carbonaceous material within the above ranges in the dry electrode active material may more effectively secure conduction paths in the dry electrode active material and therefore, may further decrease the internal resistance of the dry electrode active material. As a result, the cycling performance of a lithium battery including the dry electrode active material may further improve.

The amount of the second carbonaceous material may be, for example, about 0.001 wt% to about 5 wt%, about 0.01 wt% to about 3 wt%, about 0.01 wt% to about 1 wt%, about 0.01 wt% to about 0.5 wt%, or about 0.01 wt% to about 0.1 wt%, with respect to the total weight of the dry electrode active material. Because the dry electrode active material includes the second carbonaceous material within the above ranges, conduction paths in the dry electrode active material may be secured, further decreasing the internal resistance of the dry electrode active material. As a result, the cycling performance of a lithium battery including the dry electrode active material may further improve.

The dry electrode active material may have a core, and the core may include, for example, a lithium transition metal oxide.

For example, the core may include a compound of (*e.g.*, selected from among) lithium transition metal oxides represented by Formulas 1 to 8:

Formula 1 $\quad Li_aNi_xCo_yM_zO_{2-b}A_b$

In Formula 1, $1.0 \leq a \leq 1.2$, $0 \leq b \leq 0.2$, $0.8 \leq x < 1$, $0 \leq y \leq 0.3$, $0 < z \leq 0.3$, $x+y+z=1$, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or any suitable combination thereof, and A may be F, S, Cl, Br, or any suitable combination thereof.

Formula 2 $\quad LiNi_xCo_yMn_zO_2$

Formula 3 $\quad LiNi_xCo_yAl_zO_2$

In Formulas 2 and 3, $0.8 \leq x \leq 0.95$, $0 \leq y \leq 0.2$, $0 < z \leq 0.2$, and $x+y+z=1$.

Formula 4 $\quad LiNi_xCo_yMn_zAl_wO_2$

In Formula 4, $0.8 \leq x \leq 0.95$, $0 \leq y \leq 0.2$, $0 < z \leq 0.2$, $0 < w \leq 0.2$, and $x+y+z+w=1$.

Formula 5 $\quad Li_aCo_xM_yO_{2-b}A_b$

In Formula 5, $1.0 \leq a \leq 1.2$, $0 \leq b \leq 0.2$, $0.9 \leq x < 1$, $0 \leq y \leq 0.1$, $x+y=1$, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or any suitable combination thereof, and A may be F, S, Cl, Br, or any suitable combination thereof.

Formula 6 $\quad Li_aNi_xMn_yM'_zO_{2-b}A_b$

In Formula 6, $1.0 \leq a \leq 1.2$, $0 \leq b \leq 0.2$, $0 < x \leq 0.3$, $0.5 \leq y < 1$, $0 < z \leq 0.3$, $x+y+z=1$, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or any suitable combination thereof, and A may be F, S, Cl, Br, or any suitable combination thereof.

Formula 7 $\quad Li_aM1_xM2_yPO_{4-b}X_b$

In Formula 7, $0.90 \leq a \leq 1.1$, $0 \leq x \leq 0.9$, $0 \leq y \leq 0.5$, $0.9 < x+y < 1.1$, $0 \leq b \leq 2$, M1 may be chromium (Cr), manganese (Mn), iron (Fe), cobalt (Co), nickel (Ni), copper (Cu), zirconium (Zr), or any suitable combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or any suitable combination thereof, and X may be O, F, S, P, or any suitable combination thereof.

Formula 8 $\quad Li_aM3_zPO_4$

In Formula 8, $0.90 \leq a \leq 1.1$, $0.9 \leq z \leq 1.1$, and M3 may be chromium (Cr), manganese (Mn), iron (Fe), cobalt (Co), nickel (Ni), copper (Cu), zirconium (Zr), or any suitable combination thereof.

The shell may include the first metal oxide and the first carbonaceous material, and the core may include, for example, a lithium transition metal oxide. The first carbonaceous material and the transition metal of the lithium transition metal oxide may be, for example, chemically bound by a chemical bond. The carbon atom (C) of the first carbonaceous material and the transition metal (Me) of the lithium transition metal oxide may be chemically bound, for example, through a C-O-Me bond via oxygen atoms (*e.g.*, C-O-Ni bond, or C-O-Co bond). The chemical binding of the first carbonaceous material disposed in the shell and the lithium transition metal oxide disposed in the core by a chemical bond may lead to complexation of the core and the shell. Thus, the resulting dry electrode active material may be distinguished from a simple physical mixture or blend of the first carbonaceous material and the lithium transition metal oxide. The first metal oxide and the first carbonaceous material may be chemically bound by a chemical bond. In one or more embodiments, the chemical bond may be, for example, a covalent bond or an ionic bond.

The dry electrode active material may include, for example, a first dry electrode active material and a second dry electrode active material. The first dry electrode active material and the second dry electrode active material may have, for example, a different particle diameter (e.g. average particle diameter, such as D50) from each other.

For example, the first dry electrode active material may be a large-diameter dry electrode active material having a larger particle diameter (e.g. average particle diameter, such as D50) than that of the second dry electrode active material. For example, the second dry electrode active material may be a small-diameter dry electrode active material having a smaller particle diameter (e.g. average particle diameter, such as D50) than that of the first dry electrode active material. For example, the first dry electrode active material may be a large-particle dry electrode active material, and the second dry electrode active material may be a small-particle dry electrode active material. For example, the second dry electrode active material having a smaller average particle diameter than that of the first dry electrode active material may be disposed in voids in the first dry electrode active material. As particles of the second dry electrode active material, which are small-diameter particles, are disposed in voids between particles of the first dry electrode active material, which are large-diameter particles, the ionic conductivity and electronic conductivity of a dry electrode including the dry electrode active material may concurrently (e.g., simultaneously) improve. Further, the energy density of the dry electrode including the dry electrode active material may further improve. As a result, the energy density and cycling performance of a lithium battery including the dry electrode active material may improve.

The first dry electrode active material and the second dry electrode active material may have, for example, a bimodal particle size distribution in a particle size distribution diagram. For example, in the particle size distribution diagram obtained utilizing a particle size analyzer (PSA) and/or the like, the composite cathode active material may show a bimodal particle size distribution having two peaks. The bimodal particle size distribution may have a first peak corresponding to the first dry electrode active material, and a second peak corresponding to the second dry electrode active material.

A particle size ratio (e.g. average particle size ratio) of the first dry electrode active material and the second dry electrode active material may be, for example, about 3:1 to about 40:1, about 3:1 to about 30:1, about 3:1 to about 20:1, about 3:1 to about 10:1, or about 3:1 to about 5:1. Because the first dry electrode active material and the second dry electrode active material have a particle size ratio in the above ranges, the energy density and cycling performance of a lithium battery including the composite cathode active material may further improve.

For example, the first dry electrode active material (e.g., in a form of particles) may have a particle diameter (e.g. average particle diameter, such as D50) of about 8 $\mu$m to about 30 $\mu$m, about 9 $\mu$m to about 25 $\mu$m, about 9 $\mu$m to about 20 $\mu$m, about 9 $\mu$m to about 15 $\mu$m, or about 9 $\mu$m to about 12 $\mu$m. The particle diameter of the first dry electrode active material may be, for example, a median particle diameter (D50). For example, the second dry electrode active material (e.g., in a form of particles) may have a particle diameter (e.g. average particle diameter, such as D50) of about 1 $\mu$m to less than about 8 $\mu$m, about 1 $\mu$m to about 7 $\mu$m, about 1 $\mu$m to about 6 $\mu$m, about 1 $\mu$m to about 5 $\mu$m, or about 1 $\mu$m to about 4 $\mu$m. The particle diameter of the second dry electrode active material may be, for example, a median particle diameter (D50). Because the first dry electrode active material and the second dry electrode active material have an average particle diameter in the above ranges, the energy density and/or cycling performance of a lithium battery including the composite cathode active material may further improve. The particle diameter (e.g. average particle diameter, such as D50) of the first dry electrode active material and the second dry electrode active material are measured, for example, by utilizing a measurement device that uses a laser diffraction technique or a dynamic light scattering technique. The particle diameter (e.g. average particle diameter, such as D50) may be measured by, for example, a laser scattering particle size distribution analyzer (*e.g.*, LA-920 manufactured by HORIBA) and is a volume-based median particle diameter (D50) at a cumulative percentage of 50 % from the smallest particle size. In one or more embodiments, the particle diameter (e.g. average particle diameter, such as D50) of the first dry electrode active material and the second dry electrode active material may be measured utilizing scanning electron microscope (SEM) images, or an optical microscope.

A weight ratio of the first dry electrode active material and the second dry electrode active material may be, for example, about 90:10 to about 60:40, about 85:15 to about 65:35, about 80:20 to about 65:35, or about 75:25 to about 65:35. Because the weight ratio of the first dry electrode active material and the second dry electrode active material is in the above ranges, the energy density and/or cycling performance of a lithium battery including the composite cathode active material may further improve.

The dry electrode film may include a dry binder. The dry binder is, for example, a binder that does not get impregnated, dissolved, or dispersed in processing solvents during the manufacturing process of a dry electrode film.

The dry binder is, for example, a binder that does not contain processing solvents or does not come in contact with processing solvents during the manufacturing process of a dry electrode film. The dry binder is, for example, a fibrillized binder or a fibrous binder. The fibrillized binder or the fibrous binder may act as a matrix that supports and binds together electrode active materials and other components included in an electrode active material layer. The fibrous form of the fibrillized binder or the fibrous binder may be confirmed from, for example, a scanning electron microscopic image of a cross-section of an electrode. The fibrillized binder or the fibrous binder may have an aspect ratio of, for example, 10 or more, 20 or more, 50 or more, or 100 or more.

Examples of the dry binder may include polytetrafluoroethylene (PTFE), a polyvinylidene fluoride-hexapropylene (PVDF-HFP) copolymer, polyvinylidene fluoride (PVDF), polyvinyl alcohol, polyacrylonitrile, carboxymethyl cellulose (CMC), starch, hydroxypropyl cellulose, cellulose, polyvinylpyrrolidone, polyethylene, polypropylene, an ethylene-propylene-diene polymer (EPDM), sulfonated-EPDM, styrene butadiene rubber (SBR), fluororubber, or a copolymer thereof; however, the dry binder is not limited thereto and may be any suitable binder usable in the preparation of a dry electrode. For example, the dry binder may include a fluorinated binder. The fluorinated binder may be, for example, polytetrafluoroethylene (PTFE), a polyvinylidene fluoride-hexapropylene (PVDF-HFP) copolymer, or polyvinylidene fluoride (PVDF).

The dry binder may have a glass transition temperature $T_g$ of, for example, about -30 °C to about 150 °C, about 15 °C to about 150 °C, about 15 °C to about 130 °C, about 50 °C to about 130 °C, about 100 °C to about 130 °C, or about 120 °C to about 130 °C. The glass transition temperature $T_g$ of the dry binder may be, for example, about -30 °C to about 150 °C, about -30 °C to about 100 °C, about -30 °C to about 50 °C, about -30 °C to about 15 °C, about -30 °C to about -10 °C, or about -30 °C to about -20 °C. The glass transition temperature of PTFE is, for example, about 120 °C to about 130 °C. With the dry binders having a glass transition temperature in the above ranges, a fibrillized binder or a fibrous binder may be more easily obtained during the dry electrode manufacturing process. The glass transition temperature of the dry binder may be for example measured by DSC (Differential Scanning Calorimeter), DMA (Dynamic Mechanical Analyzer), TMA (Thermomechanical Analyzer), and/or TGA (Thermogravimetric Analyzer).

The amount of the dry binder may be, for example, about 0.1 wt% to about 5 wt%, about 0.5 wt% to about 5 wt%, or about 1 wt% to about 5 wt% with respect to the total weight of the dry electrode film. Because the dry electrode film includes a dry binder in the above ranges, the dry electrode film may have improved adhesion and maintain high energy density.

The dry electrode film may further include, for example, a conductive material. For example, the conductive material may be a dry conductive material. The dry conductive material is, for example, a conductive material that does not get impregnated, dissolved, or dispersed in processing solvents during the manufacturing process of a dry electrode film. The dry conductive material is, for example, a conductive material that does not contain processing solvents or does not come in contact with processing solvents during the manufacturing process of a dry electrode film. For example, the dry conductive material may include a carbonaceous conductive material. The carbonaceous conductive material may include, for example, a fibrous carbonaceous material having an aspect ratio of 10 or more, a particulate carbonaceous material having an aspect ratio of less than 10, or any suitable combination thereof.

The fibrous carbonaceous material having an aspect ratio of 10 or more may be carbon fibers, carbon nanotubes, carbon nanobelts, and/or the like, but the present disclosure is not limited thereto, and may utilize any suitable material available as a carbonaceous conductive material in the art. The fibrous carbonaceous material having an aspect ratio of 10 or more may be (e.g., may be selected from among) the second carbonaceous materials described above. The fibrous carbonaceous conductive material is simply mixed with the dry electrode active material and in this regard, may be distinguished from the second carbonaceous material constituting part of the dry electrode active material.

The particulate carbonaceous material having an aspect ratio of less than 10 may be, for example, carbon black, acetylene black, Ketjen black, natural graphite, artificial graphite, and/or the like, but the present disclosure is not limited thereto, and may utilize any suitable material available as a carbonaceous conductive material in the art. The aspect ratio of the particulate carbonaceous material may be, for example, about 1 to about 7, about 1 to about 5, about 1 to about 3, or about 1 to about 2.

The amount of the dry conductive material included in the dry electrode film may be, for example, about 0.1 wt% to about 5 wt%, about 0.5 wt% to about 5 wt%, or about 1 wt% to about 5 wt%, with respect to the total weight of the dry electrode film. The dry electrode film may have improved conductivity by including the dry conductive material in the above ranges, and a lithium battery including this dry electrode film may have improved cycling performance.

For example, the dry electrode film may be a self-standing film. For example, the dry electrode film may retain a film form without a support. Therefore, the dry electrode film may be prepared as a separate self-standing film and disposed on an electrode current collector. For example, because the dry electrode film is prepared by a dry method, the dry electrode film may not contain any processing solvent deliberately added. For example, the dry electrode film may contain no residual processing solvent. There may be a trace amount of solvent incidentally remaining in the dry electrode film; however, this solvent is not considered as a processing solvent deliberately added. As such, the dry electrode film may be distinguished from a wet electrode film prepared through a wet process in which constituent components and a processing solvent are mixed together, followed by completely or partially removing the processing solvent through drying.

For example, the dry electrode film may have a tensile strength at 25 °C of 800 kPa or more, 900 kPa or more, or 1,000 kPa or more. For example, the dry electrode film may have a tensile strength at 25 °C of about 800 kPa to about 5,000 kPa, about 800 kPa to about 3,000 kPa, or about 800 kPa to about 2,000 kPa. With the dry electrode film having a tensile strength in the above ranges, structural stability of the dry electrode film may improve. For example, the dry electrode film may maintain a stable three-dimensional conductive network during the charging and discharging processes, which may lead to an improvement in the reversibility of electrode reactions. With the dry electrode film having a high tensile strength in the above ranges, mechanical strength of the dry electrode film may improve. As the dry electrode film has improved mechanical strength, local degradations due to volume changes may be inhibited or reduced during charging and discharging of an electrode provided with the dry electrode film, and a lithium battery including the same. As a result, cycling performance of the lithium battery may improve.

A dry electrode according to one or more embodiments may include an electrode current collector and the dry electrode film described above disposed on one side or both sides (*e.g.* opposite sides) of the electrode current collector.

As the dry electrode includes the dry electrode film, the dry electrode may have a decreased internal resistance and improved mechanical properties.

The electrode current collector may include, for example, a substrate.

Materials constituting the substrate may be any conductive material that does not react with lithium, that is, does not form an alloy or a compound with lithium. The base material may be, for example, a metal or an alloy. For example, the substrate may include (e.g., consist of) indium (In), copper (Cu), magnesium (Mg), stainless steel (SUS), titanium (Ti), iron (Fe), cobalt (Co), nickel (Ni), zinc (Zn), aluminium (Al), germanium (Ge), or an alloy thereof. The substrate may have a form of (*e.g.*, selected from among) a sheet, a foil, a film, a plate, a porous structure, a mesoporous structure, a through-hole containing structure, a polygonal ring, a mesh, a foam, and/or a nonwoven structure, but the present disclosure is not limited to the aforementioned forms, and may have any suitable form utilized in the art.

For example, a dry electrode may include an electrode current collector and an interlayer disposed between the electrode current collector and the dry electrode film. The interlayer may include, for example, a carbonaceous conductive material.

For example, the interlayer may be directly disposed on one side or both sides (*e.g.* opposite sides) of the electrode current collector. Therefore, there may be no other layers disposed between the electrode current collector and the interlayer. Because the interlayer is directly disposed on one side or both sides (e.g., opposite sides) of the electrode current collector, adhesion between the electrode current collector and the dry electrode film may further improve.

The interlayer may have a thickness of, for example, about 0.01 % to about 30 %, about 0.1 % to about 30 %, about 0.5 % to about 30 %, about 1 % to about 25 %, about 1 % to about 20%, about 1 % to about 15 %, about 1 % to about 10 %, about 1 % to about 5 %, or about 1 % to about 3 %, with respect to the thickness of the electrode current collector. The interlayer may have a thickness of, for example, about 10 nm to about 5 $\mu$m, about 50 nm to about 5 $\mu$m, about 200 nm to about 4 $\mu$m, about 500 nm to about 3 $\mu$m, about 500 nm to about 2 $\mu$m, about 500 nm to about 1.5 $\mu$m, about 700 nm to about 1.3 $\mu$m. With the interlayer having a thickness in the above ranges, adhesion between the electrode current collector and the dry electrode film may further improve, and an increase of interfacial resistance may be inhibited or reduced.

The interlayer may include, for example, a carbonaceous conductive material. The carbonaceous conductive material included in the interlayer may be (*e.g.*, may be selected from among) the carbonaceous conductive materials utilized in the dry electrode film. The interlayer may include the same carbonaceous conductive material as the carbonaceous conductive material utilized in the dry electrode film. Due to the carbonaceous conductive material included in the interlayer, the interlayer may be, for example, a conductive layer.

The interlayer may further include, for example, a binder. With the interlayer further including a binder, adhesion between the electrode current collector and the dry electrode film may further improve. The binder included in the interlayer may be, for example, a conductive binder or a non-conductive binder. For example, the conductive binder may be an ionically conductive binder and/or an electronically conductive binder. A binder having both (e.g., simultaneously) ionic conductivity and electron conductivity may be considered as belonging to both (e.g., simultaneously) ionically conductive binders and electronically conductive binders.

The binder included in the interlayer may be (*e.g.*, may be selected from among) the binders utilized in the dry electrode film. The interlayer may include the same binder as the binder utilized in the dry electrode film. The binder included in the interlayer may be, for example, a fluorinated binder. The fluorinated binder included in the interlayer may be, for example, polyvinylidene fluoride (PVDF). In one or more embodiments, the interlayer may be an adhesive layer including a binder. For example, the interlayer may be a conductive layer that includes a binder and a carbonaceous conductive material.

The interlayer may be disposed on the electrode current collector by, for example, a dry method or a wet method. The interlayer may be disposed on an electrode current collector by a dry method, for example, deposition such as chemical vapor deposition (CVD), physical vapor deposition (PVD), and/or the like. The interlayer may be disposed on the substrate by a wet method, for example, by spin coating, dip coating, and/or the like. For example, the interlayer may be disposed on an electrode current collector by depositing a carbonaceous conductive material on a substrate. The dry-coated interlayer may be composed of a carbonaceous conductive material and not contain a binder. In one or more embodiments, the interlayer may be disposed on an electrode current collector by having a composition containing a carbonaceous conductive material, a binder, and a solvent, coated and dried on the surface of the electrode current collector. The interlayer may be a monolayer structure or a multilayer structure that includes a plurality of layers. The multilayer structure may be a two-layer structure, a three-layer structure, a four-layer structure, and/or the like.

The electrode current collector may have a structure that includes a base film and a metal layer disposed on one side or both sides (*e.g.*, opposite sides) of the base film. For example, the electrode current collector may have a structure that includes a base film and a metal layer disposed on one side or both sides (e.g., opposite sides) of the base film. The base film may include, for example, a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or any suitable combination thereof. Because the base film includes a thermoplastic polymer, the base film gets liquefied in the event of a short circuit, thereby preventing or reducing a rapid increase in electric current. For example, the base film may be an insulator. For example, the metal layer may include copper (Cu), stainless steel, titanium (Ti), iron (Fe), cobalt (Co), nickel (Ni), or an alloy thereof. In the event of an overcurrent, the metal layer may be disconnected, thus acting as an electrochemical fuse to provide protection against short circuits. A limiting current and a maximum current may be controlled or selected through controlling a thickness of the metal layer. The metal layer may be plated or deposited on the base film. As the thickness of the metal layer decreases, the limiting current and/or maximum current of the electrode current collector decrease, which may lead to an improvement in stability of the lithium battery in case of a short circuit.

A lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of the same material as the metal of the metal layer. For example, the metal chip may be a metal foil, a metal mesh, and/or the like. For example, the metal chip may be an aluminium foil, a copper foil, a SUS (stainless steel) foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer.

For example, the base film may have a thickness of about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. With the base film having a thickness within the above ranges, the weight of the electrode assembly may be more effectively reduced. In one or more embodiments, the base film may have a melting point of about 100 °C to about 300 °C, about 100 °C to no more than 250 °C, or about 100 °C to about 200 °C. Because the base film has a melting point within the above ranges, the base film may easily melt and be bonded to the lead-tab while welding the lead-tab. To improve adhesion between the base film and the metal layer, a surface treatment such as corona treatment may be performed on the base film.

For example, the metal layer may have a thickness of about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. With the metal layer having a thickness within the above ranges, the electrode assembly may provide stability while maintaining conductivity. For example, the metal chip may have a thickness of about 2 $\mu$m to about 10 $\mu$m, about 2 $\mu$m to about 7 $\mu$m, or about 4 $\mu$m to about 6 $\mu$m. With the metal chip having a thickness within the above ranges, the metal layer and the lead-tab may be more easily connected. With the electrode current collector having the above structure, the weight of the electrode may be reduced and as a result, may improve in energy density. The electrode current collector may be, for example, a cathode current collector. The electrode current collector may be, for example, an anode current collector.

The dry electrode film included in a dry electrode corresponds to an electrode active material layer.

If (*e.g.*, when) a dry electrode active material (*e.g.*, dry electrode film) of the dry electrode is measured by a surface and interfacial cutting analysis system (SAICAS), a change of vertical relative binding force ($F_{VR}$) according to depth from a first point, which is 5 % away from a surface of the electrode active material layer in a direction from the surface of the electrode active material layer to the electrode current collector, to a second point, which is 5 % away from a surface of the electrode current collector, may be 300 % or less, wherein the first and second points are given with respect to the total thickness of the electrode active material layer. The change in vertical relative binding force may be, for example, about 10 % to about 300 %, about 10 % to about 250 %, about 10 % to about 200 %, about 10 % to about 150 %, or about 10 % to about 100 %. For example, the second point which is 5 % away from the surface of the electrode current collector in a direction from the surface of the electrode current collector to the electrode active material layer may correspond to a point that is 95 % away from the surface of the electrode active material layer in a direction from the surface of the electrode active material layer to the electrode current collector, with respect to the total thickness of the electrode active material layer. The vertical relative binding force may be calculated by Equation 2. For the SAICAS measurement method, refer to Evaluation Example 11, for example.

Change in Vertical Relative Binding Force ($F_v$) = [(Maximum Vertical Relative Binding Force ($F_{VR1}$)
- Minimum Vertical Relative Binding Force ($F_{VR1}$))/Minimum Vertical Relative Binding Force ($F_{VR1}$)]    equation 2
$\times$ 100

As in the electrode active material layer of the dry electrode, the change in $F_{VR}$ as measured by the SAICAS is 300 % or less, the distribution of constituent components in the electrode may be more substantially uniform. Further, because side reactions and increase of internal resistance due to non-uniform (substantially non-uniform) distributions of constituent components in the electrode active material layers are suppressed or reduced, reversibility of electrode reactions may improve. Even with the electrode having a high loading capacity, the cycling performance of a lithium battery may improve.

If (*e.g.*, when) the electrode active material layer of the dry electrode is measured by the SAICAS, a horizontal binding force ratio of a first horizontal binding force ($F_{H1}$) at a first point, which is 10 % away from a surface of the electrode active material layer in a direction from the surface of the electrode active material layer to the electrode current collector, to a second horizontal binding force ($F_{H2}$) at a second point, which is 10 % away from a surface of the electrode current collector in a direction from the surface of the electrode current collector to the electrode active material layer (*e.g.*, depth direction), may be, for example, 50 % or more, where the first and second points are given with respect to the total depth from the surface of the electrode active material layer to the surface of the electrode current collector. The horizontal binding force ratio may be, for example, about 50 % to about 100 %, about 60 % to about 100 %, about 70 % to about 100 %, about 80 % to about 100 %, or about 90 % to about 100 %. The second point, which is 10% away from the surface of the electrode current collector in a direction from the surface of the electrode current collector to the electrode active material layer may correspond to a point that is 90 % away from the surface of the electrode active material layer in a direction from the surface of the electrode active material layer to the electrode current collector, with respect to the total thickness of the electrode active material layer. For example, horizontal binding force ratio may be represented by Equation 3. For details of the SAICAS measurement method, refer to Evaluation Example 12 as an example.

Horizontal Binding Force Ratio = [Second Horizontal Binding Force ($F_{H2}$) / First Horizontal Binding
Force ($F_{H1}$)] $\times$ 100    equation 3

As the horizontal relative binding force ratio is 50 % or more as measured by the SAICAS, the distribution of constituent components inside the electrode may be more (substantially more) uniform. With the dry electrode having a horizontal relative binding force ratio in the above ranges, the cycling performance of a lithium battery employing the dry electrode may further improve.

The dry electrode may be a dry cathode, for example. The dry cathode may include a dry cathode film, and the dry cathode film may include a dry cathode active material having the core/shell structure described above.

The dry cathode active material having the core/shell structure may have a lithium transition metal oxide in the core, and a first metal oxide and a first carbonaceous material in the shell.

The dry cathode active material may further include a general dry cathode active material in addition to the dry cathode active material having the core/shell structure described above. For the general dry cathode active material, any suitable material commonly available as a dry cathode active material in the art may be utilized without limitation.

For example, the dry cathode active material may utilize at least one of composite oxides of lithium with a metal of (*e.g.*, a metal selected from among) cobalt, manganese, nickel, and/or any suitable combination thereof. For example, a compound represented by any one of the following formulae may be utilized: $Li_aA_{1-b}B'_bD_2$ (wherein $0.90 \leq a \leq 1$ and $0 \leq b \leq 0.5$); $Li_aE_{1-b}B'_bO_{2-c}D_c$ (wherein $0.90 \leq a \leq 1$, $0 \leq b \leq 0.5$, and $0 \leq c \leq 0.05$); $LiE_{2-b}B'_bO_{4-c}D_c$ (wherein $0 \leq b \leq 0.5$ and $0 \leq c \leq 0.05$); $Li_aNi_{1-b-e}Co_bB'_eD_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Co_bB'_cO_{2-\alpha}F'_\alpha$ (wherein $0.90 \leq a \leq 1$, $0 \leq b \leq 0.5$, $0 \leq c \leq 0.05$, and $0 < \alpha < 2$); $Li_aNi_{1-b-c}Co_bB'_cO_{2-\alpha}F'_2$ (wherein $0.90 \leq a \leq 1$, $0 \leq b \leq 0.5$, $0 \leq c \leq 0.05$, and $0 < \alpha < 2$); $Li_aNi_{1-b-c}Mn_bB'_cD_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Mn_bB'_cO_{2-\alpha}F'_\alpha$ (wherein $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_2$ (wherein $0.90 \leq a \leq 1$, $0 \leq b \leq 0.5$, $0 \leq c \leq 0.05$, and $0 < \alpha < 2$); $Li_aNi_bE_cG_dO_2$ (wherein $0.90 \leq a \leq 1$, $0 \leq b \leq 0.9$, $0 \leq c \leq 0.5$, and $0.001 \leq d \leq 0.1$); $Li_aNi_bCo_cMn_dG_eO_2$ (wherein $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (wherein $0.90 \leq a \leq 1$ and $0.001 \leq b \leq 0.1$); $Li_aCoG_bO_2$ (wherein $0.90 \leq a \leq 1$ and $0.001 \leq b \leq 0.1$); $Li_aMnG_bO_2$ (wherein $0.90 \leq a \leq 1$ and $0.001 \leq b \leq 0.1$); $Li_aMn_2G_bO_4$ (wherein $0.90 \leq a \leq 1$ and $0.001 \leq b \leq 0.1$);

$QO_2$; $QS_2$; $LiQS_2$; $V_2O_5$; $LiV_2O_5$; $LiI'O_2$; $LiNiVO_4$; $Li_{(3-f)}J_2(PO_4)_3$ $(0 \leq f \leq 2)$; $Li_{(3-f)}Fe_2(PO_4)_3$ $(0 \leq f \leq 2)$; and $LiFePO_4$.

In the formulae representing the above-described compounds, A may be nickel (Ni), cobalt (Co), manganese (Mn), or any suitable combination thereof; B' may be aluminium (Al), Ni, Co, Mn, chromium (Cr), iron (Fe), magnesium (Mg), strontium (Sr), vanadium (V), a rare earth element, or any suitable combination thereof; D may be oxygen (O), fluorine (F), sulfur (S), phosphorus (P), or any suitable combination thereof; E may be Co, Mn, or any suitable combination thereof; F' may be F, S, P, or any suitable combination thereof; G may be Al, Cr, Mn, Fe, Mg, lanthanum (La), cerium (Ce), Sr, V, or any suitable combination thereof; Q may be titanium (Ti), molybdenum (Mo), Mn, or any suitable combination thereof; I' may be Cr, V, Fe, Sc, yttrium (Y), or any suitable combination thereof; and J may be V, Cr, Mn, Co, Ni, copper (Cu), or any suitable combination thereof.

A compound having a coating layer added on a surface of the above compound may also be utilized. Furthermore, a mixture of the above compound with a compound having a coating layer added thereon may also be utilized. The coating layer added on the surface of the above-described compound may include, for example, compounds of a coating element, such as oxides and hydroxides of the coating element, oxyhydroxides of the coating element, oxycarbonates of the coating element, and hydroxycarbonates of the coating element. A compound forming the above coating layer may be amorphous or crystalline. The coating element included in the coating layer may be Mg, Al, Co, K, Na, Ca, Si, Ti, V, Sn, Ge, Ga, B, As, Zr, or any suitable mixture thereof. The method of forming the coating layer may be selected within a range that does not adversely affect physical properties of a cathode active material. Examples of coating method may include spray coating, dip coating, and/or the like. Specific coating methods are generally utilized / generally available to those of ordinary skill in the art and therefore, detailed descriptions thereof may not be provided here.

The dry electrode may be a dry anode, for example. The dry anode may include a dry anode film, and the dry anode film may include a dry anode active material.

The dry anode active material may be any material utilized as an anode active material of a lithium battery in the art. For example, the anode active material may include at least one of (e.g., at least one selected from among) lithium metal, a metal alloyable with lithium, a transition metal oxide, a non-transition metal oxide, and/or a carbonaceous material. Examples of the metal alloyable with lithium may include Si, Sn, Al, Ge, Pb, Bi, Sb, a Si-Y alloy (wherein Y is an alkali metal, an alkaline earth metal, an element of Group 13, an element of Group 14, a transition metal, a rare earth metal, or any suitable combination thereof, but not Si), a Sn-Y alloy (wherein Y is an alkali metal, an alkaline earth metal, an element of Group 13, an element of Group 14, a transition metal, a rare earth metal, or any suitable combination thereof, but not Sn) and/or the like. For example, Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or any suitable combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, or any suitable combination thereof). Examples of the transition metal oxide may include a lithium titanium oxide, a vanadium oxide, a lithium vanadium oxide, and/or the like. In one or more embodiments, the non-transition metal oxide may be $SnO_2$, $SiO_x$ $(0<x<2)$, and/or the like. For example, the carbonaceous material may be or include a crystalline carbon, an amorphous carbon, or any suitable mixture thereof. Examples of the crystalline carbon may include graphite, such as artificial graphite or natural graphite in shapeless, plate, flake, spherical or fiber form. Examples of the amorphous carbon may include soft carbon (low-temperature calcined carbon) or hard carbon, mesophase pitch carbides, calcined cokes, and/or the like.

According to one or more embodiments, a lithium battery may include a first electrode, a second electrode, and an electrolyte disposed between the first electrode and the second electrode, wherein the first electrode, the second electrode, or any suitable combination thereof is the dry electrode described above.

As a lithium battery includes a dry electrode with reduced internal resistance and improved mechanical properties, the lithium battery may have improved cycling performance.

For example, the lithium battery may include a dry cathode, may include a dry anode, or may include a dry anode and a dry cathode. For example, the lithium battery may include a dry cathode and a wet anode, or may include a wet cathode and a dry anode.

The lithium battery may include an electrolyte, wherein the electrolyte may include a liquid electrolyte, a solid electrolyte, a gel electrolyte, or any suitable combination thereof.

The liquid electrolyte may be, for example, an organic electrolyte. The organic electrolyte may be prepared, for example, by dissolving a lithium salt in an organic solvent.

For the organic solvent, any suitable organic solvent available in the art may be utilized. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and suitable mixtures thereof.

For the lithium salt, any suitable lithium salt available in the art may be utilized. For example, the lithium salt

may be $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are natural numbers), LiCl, Lil, or any suitable mixture thereof.

Examples of the solid electrolyte may include an inorganic solid electrolyte, an organic solid electrolyte, an organic-inorganic hybrid solid electrolyte, or any suitable combination thereof.

Examples of the solid electrolyte may include an oxide-based solid electrolyte, a sulfide-based solid electrolyte, a polymer solid electrolyte, or any suitable combination thereof.

For example, the solid electrolyte may be a boron oxide, a lithium oxynitride, and/or the like, but the present disclosure is not limited thereto and may include any suitable solid electrolyte available in the art. The solid electrolyte may be formed on the anode by methods such as sputtering, for example, or a separate solid electrolyte sheet may be stacked on the anode.

For example, the oxide-based all-solid electrolyte may include $Li_{1+x+y}Al_xTi_{2-x}Si_yP_{3-y}O_{12}$ (0<x<2 and 0≤y<3), $BaTiO_3$, $Pb(Zr,Ti)O_3$ (PZT), $Pb_{1-x}La_xZr_{1-y}Ti_yO_3$ (PLZT, 0≤x<1 and 0≤y<1), $Pb(Mg_3Nb_{2/3})O_3-PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (0<x<2 and 0<y<3), $Li_xAl_yTi_z(PO_4)_3$ (0<x<2, 0<y<1, and 0<z<3), $Li_{1+x+y}(Al, Ga)_x(Ti, Ge)_{2-x}Si_yP_{3-y}O_{12}$ (0≤x≤1 and 0≤y≤1 ), $Li_xLa_yTiO_3$ (0<x<2 and 0<y<3), $Li_2O$, LiOH, $Li_2CO_3$, $LiAlO_2$, $Li_2O-Al_2O_3-SiO_2-P_2O_5-TiO_2-GeO_2$, $Li_{3+x}La_3M_2O_{12}$ (M = Te, Nb, or Zr, 0≤x≤10), $Li_{3+x}La_3Zr_{2-y}M_yO_{12}$ (M doped LLZO, M=Ga, W, Nb, Ta, Al or any suitable combination thereof, 0≤x≤10 and 0<y<2), $Li_7La_3Zr_{2-x}Ta_xO_{12}$ (0<x<2, LLZ-Ta), or any suitable combination thereof. The oxide-based solid electrolyte may be, for example, a garnet-type or kind solid electrolyte. The oxide-based solid electrolyte is produced by a sintering method and/or the like.

The oxide-based solid electrolyte may include $Li_7La_3Zr_2O_{12}$ (LLZO), $L_{16.5}La_3Zr_{1.5}Ta_{0.5}O_{12}$, $Li_{1.3}Al_{0.3}Ti_{1.7}(PO_4)_3$, $Li_{0.34}La_{0.5}TiO_{2.94}$, $Li_{1.07}Al_{0.69}Ti_{1.46}(PO_4)_3$, $50Li_4SiO_4-50Li_2BO_3$, $90Li_3BO_3-10Li_2SO_4$, $Li_{2.9}PO_{3.3}N_{0.46}$, or any suitable combination thereof.

The sulfide-based solid electrolyte may be, for example, at least one of (e.g., at least one selected from among) $Li_2S-P_2S_5$ and/or $Li_2S-P_2S_5$-LiX, wherein X is a halogen element; $Li_2S-P_2S_5-Li_2O$, $Li_2S-P_2S_5-Li_2O-Lil$, $Li_2S-SiS_2$, $Li_2S-SiS_2$-Lil, $Li_2S-SiS_2$-LiBr, $Li_2S-SiS_2$-LiCl, $Li_2S-SiS_2-B_2S_3$-Lil, $Li_2S-SiS_2-P_2S_5$-Lil, $Li_2S-B_2S_3$, and $Li_2S-P_2S_5-Z_mS_n$, wherein m and n each are a positive number, and Z is Ge, Zn or Ga; $Li_2S-GeS_2$, $Li_2S-SiS_2-Li_3PO_4$, and $Li_2S-SiS_2-Li_pMO_q$, wherein p and q each are a positive number and M is P, Si, Ge, B, Al, Ga or In; $Li_{7-x}PS_{6-x}Cl_x$, wherein 0≤x≤2; $Li_{7-x}PS_{6-x}Br_x$, wherein 0≤x≤2; and $Li_{7-x}PS_{6-x}I_x$, wherein 0≤x≤2. The sulfide-based solid electrolyte may be prepared by treating starting materials, such as $Li_2S$ and $P_2S_5$, by a method such as melt-quenching, mechanical milling, and/or the like. Following such a treatment, heat treatment may be conducted. The sulfide-based solid electrolyte may be amorphous or crystalline, or may be in a mixed state thereof.

For example, the sulfide-based solid electrolyte may include an argyrodite-type or kind solid electrolyte represented by Formula 9:

$$\text{Formula 9} \qquad Li^+_{12-n-x}A^{n+}X^{2-}_{6-x}Y^-_x$$

In Formula 9, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, and 1≤n≤5 and 0≤x≤2 may be satisfied.

The sulfide-based solid electrolyte may be an argyrodite-type or kind compound including one or more of (e.g., one or more selected from among) $Li_{7-x}PS_{6-x}Cl_x$ (wherein 0≤x≤2), $Li_{7-x}PS_{6-x}Br_x$ (wherein 0≤x≤2), and/or $Li_{7-x}PS_{6-x}I_x$ (wherein 0≤x≤2). For example, the sulfide-based solid electrolyte included in the solid electrolyte may include an argyrodite-type or kind compound including at least one of (e.g., at least one selected from among) $Li_6PS_5Cl$, $Li_6PS_5Br$, and/or $Li_6PS_5I$.

The polymer solid electrolyte may be, for example, a solid electrolyte including an ionically conductive polymer and a lithium salt, a solid electrolyte including a polymeric ionic liquid and a lithium salt, or any suitable combination thereof. For example, the polymer solid electrolyte may not contain liquid electrolytes.

The ionically conductive polymer may be a polymer that contains an ionically conductive repeating unit in its main chains or side chains. The ionically conductive repeating unit is a unit having ionic conductivity, and may be, for example, an alkylene oxide unit, a hydrophilic unit, and/or the like. The ionically conductive polymer may include, as an ionically conductive repeating unit, an ether-based monomer, an acrylate-based monomer, a methacrylate-based monomer, a siloxane-based monomer, or any suitable combination thereof. For example, the ionically conductive polymer may be polyethylene oxide (PEO), polypropylene oxide (PPO), poly(methylmethacrylate) (PMMA), poly(ethylmethacrylate) (PEMA), polydimethylsiloxane, polyacrylic acid, polymethacrylic acid, polymethyl acrylate, polyethyl acrylate, poly(2-ethylhexyl acrylate), polybutyl methacrylate, poly(2-ethylhexyl methacrylate), polydecyl acrylate, polyethylene vinyl acetate, polyvinylidene fluoride (PVDF), vinylidene fluoride-hexafluoropropylene (PVDF-HFP), a poly(styrene-b-ethylene oxide) block copolymer (PS-PEO), poly(styrene-butadiene), poly(styreneisoprene-styrene), a poly(styrene-b-divinylbenzene) block copolymer, a poly(styreneethylene oxide-styrene) block copolymer, polystyrene sulfonate (PSS), polyvinyl fluoride (PVF), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), and lithium 9,10-diphenylanthracene-2-sulfonate (DPASLi+), or any suitable combination thereof. However, the ionically conductive polymer is not limited to the aforementioned examples but may be any suitable material available in the art that is utilized as an ionically conductive material. The ionically conductive polymer may be, for example, polyethylene oxide (PEO), polyvinyl alcohol (PVA), polyvinylpyrrolidone (PVP), polyvinylsulfone, or any suitable combination thereof.

The polymeric ionic liquid (PIL) may include a repeating unit that includes, for example, i) at least one cation of (*e.g.*, at least one cation selected from among) ammonium, pyrrolidinium, pyridinium, pyrimidinium, imidazolium, piperidinium, pyrazolium, oxazolium, pyridazinium, phosphonium, sulfonium, triazole, and/or any suitable mixture thereof; and ii) at least one anion of (e.g., at least one anion selected from among) $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $Cl^-$, $Br^-$, $I^-$, $BF_4^-$, $SO_4^{2-}$, $PF_6^-$, $ClO_4^-$, $CF_3SO_3^-$, $CF_3CO_2^-$, $(C_2F_5SO_2)_2N^-$, $(C_2F_5SO_2)(CF_3SO_2)N^-$, $NO_3^-$, $Al_2Cl_7^-$, $AsF_6^-$, $SbF_6^-$, $CF_3COO^-$, $CH_3COO^-$, $CF_3SO_3^-$, $(CF_3SO_2)_3C^-$, $(CF_3CF_2SO_2)_2N^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, $(O(CF_3)_2C_2(CF_3)_2O)_2PO^-$, and/or $(CF_3SO_2)_2N^-$. The PIL may be, for example, poly(diallyldimethylammonium)TFSI, poly(1-allyl-3-methylimidazolium trifluoromethanesulfonylimide), poly(N-methyl-N-propylpiperidinium bis(trifluoromethanesulfonyl)imide), or any suitable combination thereof.

Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ ($1 \leq x \leq 20$ and $1 \leq y \leq 20$), $LiCl$, $LiI$, or any suitable combination thereof. However, the lithium salt is not limited to the aforementioned examples, but may be any suitable material in the art that is utilized as a lithium salt.

For example, the gel electrolyte may be a gel polymer electrolyte. The gel polymer electrolyte may be, for example, an electrolyte that includes a liquid electrolyte and a polymer. The liquid electrolyte may be, for example, an ionic liquid, a mixture of a lithium salt and an organic solvent, a mixture of an ionic liquid and an organic solvent, or a mixture of lithium salt, an ionic liquid, and an organic solvent. For example, the polymer may be (*e.g.*, may be selected from among) the polymers utilized in solid polymer electrolytes. For example, the polymer may be an ionically-conductive polymer, a non-ionically conductive polymer, or any suitable combination thereof.

The organic solvent may be (*e.g.*, may be selected from among) organic solvents utilized in liquid electrolytes. The lithium salt may be (*e.g.*, may be selected from among) lithium salts utilized in solid polymer electrolytes.

The ionic liquid may refer to a room-temperature molten salt or a salt that is in a liquid state at room temperature, which includes (*e.g.*, consists of) ions alone and has a melting point of room temperature or less. For example, the ionic liquid may be at least one of (*e.g.*, at least one selected from among) compounds containing: a) at least one cation of (*e.g.*, at least one cation selected from among) ammonium, pyrrolidinium, pyridinium, pyrimidinium, imidazolium, piperidinium, pyrazolium, oxazolium, pyridazinium, phosphonium, sulfonium, triazolium, and/or any suitable mixture thereof; and b) at least one anion of (*e.g.*, at least one anion selected from among) $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^{2-}$, $CF_3SO_3^-$, $(FSO_2)_2N^-$, $(C_2F_5SO_2)_2N^-$, $(C_2F_5SO_2)(CF_3SO_2)N^-$, and/or $(CF_3SO_2)_2N^-$.

The polymer solid electrolyte may form a gel polymer electrolyte by being impregnated in an electrolyte solution in a lithium battery. The gel electrolyte may further include inorganic particles.

A method of preparing a dry electrode according to one or more embodiments is provided.

The method of preparing a dry electrode may include: providing a dry electrode film; and disposing the dry electrode film on one side or both sides (e.g., opposite sides) of an electrode current collector.

Providing the dry electrode film may include: preparing a dry mixture by dry-mixing a dry electrode active material, a dry conductive material, and a dry binder; and preparing a dry electrode film by forming the dry mixture.

First, a dry mixture may be prepared by dry-mixing an electrode active material, a dry conductive material, and a dry binder. For example, a dry mixture may be prepared by dry-mixing a dry electrode active material, a dry conductive material, and a dry binder.

The term "dry-mixing" as used herein refers to a process of mixing in the absence of processing solvent. A processing solvent may be a solvent used in the preparation of electrode slurry, for example. For example, the process solvent may be water, NMP, and/or the like, but is not limited thereto and may be any process solvent for utilization in the preparation of electrode slurry. The dry-mixing may be carried out utilizing an agitator, at a temperature of about 15 °C to 65 °C, at a rotation rate of about 10 rpm to about 10,000 rpm. The dry-mixing may be carried out utilizing an agitator, for a duration of, for example, about 1 minute to about 200 minutes.

The dry-mixing may be carried out, for example, once or more. First, a first dry mixture may be prepared through first dry-mixing of a dry electrode active material, a dry conductive material, and a dry binder. The first dry-mixing may be carried out, for example, at a temperature of about 25 °C to about 65 °C, at a rotation rate of about 10 rpm to 2,000 rpm or less, for a duration of 15 minutes or less. Then, a second mixture may be prepared through second dry-mixing of the first dry mixture. For example, the second dry-mixing may be carried out at a temperature of about 25 °C to about 65 °C, at a rotation rate of about 3,000 rpm to about 9,000 rpm, for a duration of about 10 minutes to about 60 minutes. Through the second dry-mixing, a dry mixture containing a fibrillized dry binder may be obtained.

The agitator may be, for example, a kneader. The agitator may include, for example, a chamber; at least one rotary shaft rotating disposed inside the chamber; and a blade rotatably coupled to the rotary shaft and arranged in a longitudinal direction of the rotary shaft. The blade may be, for example, one or more of (*e.g.*, one or more selected from among) a ribbon blade, a sigma blade, a Z blade, a dispersing blade, and/or a screw blade. By including the blade, a dough-like mixture may be prepared even without utilizing solvent by effectively mixing the electrode active material, dry conductive material, and the dry binder.

For example, the dry binder may utilize a vinylidene fluoride/hexafluoropropylene copolymer, polyvinylidene fluoride, polyacrylonitrile, polymethylmethacrylate, polytetrafluoroethylene (PTFE), any suitable mixture of the aforementioned polymers, a styrene butadiene rubber-based polymer, and/or the like. The dry binder may be (*e.g.*, may be selected from among) the dry binders utilized in the dry electrode film.

Examples of the dry conductive material may include: carbon black, graphite powder, natural graphite, artificial graphite, acetylene black, Ketjen black, and carbon fibers; carbon nanotubes; metal powder, metal fibers, or metal tubes, such as copper, nickel, aluminium, silver, *etc.;* and conductive polymers such as polyphenylene derivatives and/or the like. However, the dry conductive material is not limited to the aforementioned examples and may be any suitable material utilized as a conductive material in the art. For example, the conductive material may be a carbonaceous conductive material. The dry conductive material may be (*e.g.*, mat be selected from among) the dry conductive materials utilized in the dry electrode film described above.

It is also possible to form pores in the electrode plate by further adding a plasticizer or a pore former to the dry mixture.

The amount of each of the dry electrode active material, the dry binder, and the dry conductive material utilized in the dry electrode film may be at a level generally utilized in a lithium battery.

The dry cathode film may utilize a dry cathode active material as a dry electrode active material. For details of the dry cathode active material, refer to the dry electrode film described above. The dry anode film may utilize a dry anode active material as a dry electrode active material. For details of the dry anode active material, refer to the dry electrode film described above.

Next, a dry electrode film may be prepared by molding the dry mixture.

The prepared dry mixture may be introduced into an extrusion device and extruded into a sheet or film form. The pressure during extrusion may be, for example, about 4 MPa to about 100 MPa.

Next, an electrode current collector with an interlayer disposed on one side or both sides (*e.g.*, opposite sides) of a substrate may be provided.

The process of providing an electrode current collector with an interlayer disposed on one side or both sides (*e.g.*, opposite sides) of a substrate may include, for example: providing a substrate; and disposing an interlayer on one or both sides (*e.g.*, opposite sides) of the substrate.

For details of the substrate of the electrode current collector, refer to the electrode current collector described above. The substrate of the cathode current collector may be, for example, an aluminium foil. The substrate of the anode current collector may be, for example, a copper foil.

The process of disposing an interlayer on one side or both sides (*e.g.*, opposite sides) of the substrate may include dry coating and/or wet coating. The dry coating may involve, for example, coating one side or both sides (*e.g.*, opposite sides) of an electrode current collector with a carbonaceous conductive material and/or a precursor thereof, by deposition and/or the like. The deposition may be conducted at a temperature in a range of room temperature to a high temperature, at a pressure in a range of an atmospheric pressure to a vacuum. The interlayer disposed by dry coating may be composed of a carbonaceous material without containing a binder. The wet coating may involve, for example, coating one side or both sides (*e.g.*, opposite sides) of an electrode current collector with a composition containing a carbonaceous conductive material and a binder. The composition may include, for example, a carbonaceous conductive material, a binder, and a processing solvent. For details of the carbonaceous conductive material and the binder, refer to the electrodes described above. The processing solvent may be (*e.g.*, may be selected from among) the solvents utilized in the preparation of an electrode slurry. The processing solvent may be removed through drying after the composition is coated on the electrode current collector. The coating method may be carried out by spin coating, dip coating, and/or the like, but the present disclosure is not limited thereto, and any suitable coating method available in the art may be utilized.

Next, a dry electrode may be prepared by disposing the dry electrode film on one side or both sides (*e.g.*, opposite sides) of the electrode current collector in a simultaneous or sequential manner.

While and/or after disposing the dry electrode film on one side or both sides (*e.g.*, opposite sides) of the electrode current collector, a rolling process may be added.

The rolling may be performed by for example, a roll press, a flat press, and/or the like but the present disclosure is not necessarily limited thereto. The pressure during rolling may be, for example, about 1.0 ton/cm² to about 10.0 ton/cm². If (*e.g.*, when) the pressure during rolling is excessively high, a crack may form in the electrode current collector. If (*e.g.*, when) the pressure during rolling is excessively low, adhesion between the electrode current collector and the dry electrode film may decrease.

A lithium battery may be prepared by the method described in more detail below as an example; however, the method of preparing the lithium battery is not necessarily limited to this method and may vary according to conditions desired and/or required.

First, one or both of a cathode and/or an anode may be prepared following the dry electrode preparation method described above. If (*e.g.*, when) one electrode of the cathode and the anode is prepared by the electrode preparation method described above, the other electrode may be prepared by a wet preparation method. For example, the other electrode may be prepared by preparing an electrode slurry containing an electrode active material, a conductive material, a binder, and a solvent, and then coating and drying the prepared electrode slurry on an electrode current collector. The conductive material and the binder included in the electrode prepared by the wet method may be (e.g. may be selected from among) the conductive materials and/or binders utilized in the preparation of dry electrodes described above.

Next, a separator to be positioned between the cathode and the anode may be prepared.

The separator may be any separator generally utilized in lithium batteries. For example, the separator may be a separator capable of retaining a large quantity of electrolyte solution, while exhibiting low resistance to ion migration in the electrolyte. For example, the separator may be formed of a material of (*e.g.*, selected from among) glass fiber, polyester, Teflon, polyethylene, polypropylene, polytetrafluoroethylene (PTFE), and/or any suitable combination thereof that is in the form of non-woven fabric or woven fabric. A lithium ion battery may utilize, for example, a rollable separator formed of polyethylene, polypropylene, and/or the like. A lithium-ion polymer battery may utilize, for example, a separator capable of retaining a large quantity of an organic electrolyte solution.

The separator may be prepared by the method described in more detail below as an example. However, the method by which to prepare the separator is not necessarily limited to this method but may be adjusted according to conditions desired and/or required.

First, a separator composition may be prepared by mixing a polymer resin, a filler, and a solvent. The separator composition may be directly coated and dried on an electrode to thereby form a separator. In one or more embodiments, the separator may be formed by casting and drying the separator composition on a support, and then laminating a separator film exfoliated from the support onto an electrode.

The polymer utilized in the preparation of the separator is not limited, and any suitable polymer available for utilization in a binder of an electrode plate may be utilized. In one or more embodiments, the polymer may utilize a vinylidene fluoride/hexafluoropropylene copolymer, polyvinylidene fluoride (PVDF), polyacrylonitrile, polymethyl methacrylate, or any suitable mixture thereof.

Next, an electrolyte may be prepared. For details of the electrolyte, refer to the lithium battery described above.

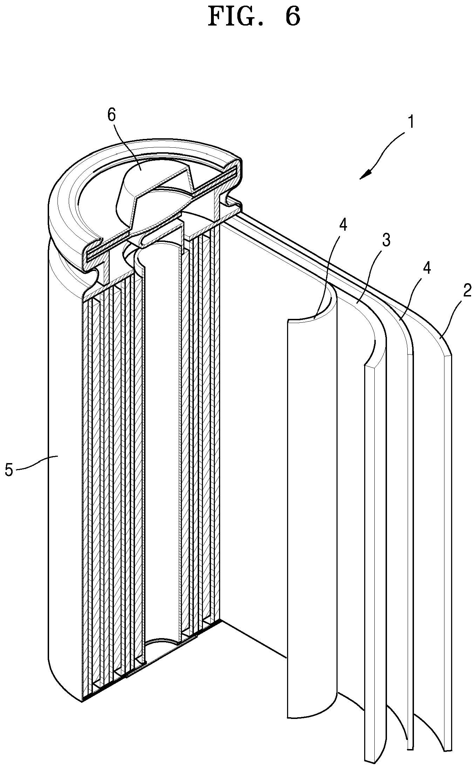

As shown in FIG. 6, a lithium battery 1 includes a cathode 3, an anode 2, and a separator 4. The cathode 3, the anode 2, and the separator 4 may be wound or folded to form a battery structure. The battery structure may be accommodated in the battery case 5. The battery case 5 may be injected with an organic electrolyte and sealed with a cap assembly 6, thereby completing the preparation of the lithium battery 1. The battery case 5 may be a cylindrical type or kind, but the present disclosure is not necessarily limited thereto, and may be a prismatic type or kind, a thin-film type or kind, and/or the like.

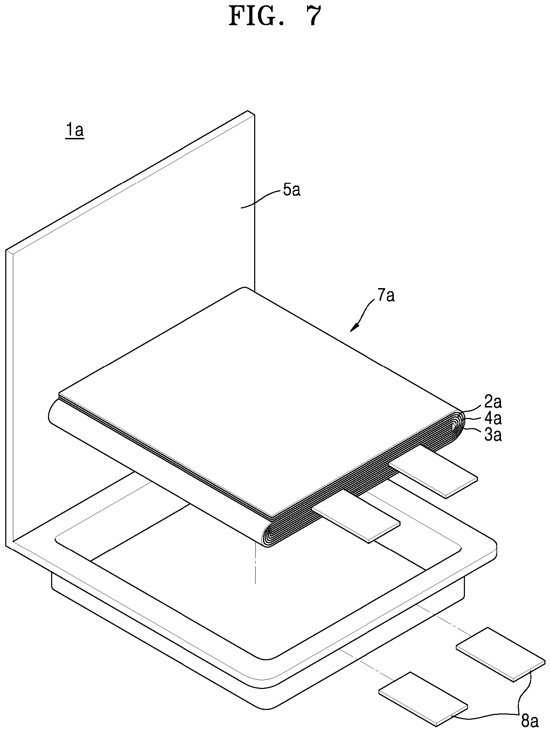

As shown in FIG. 7, a lithium battery 1a includes a cathode 3a, an anode 2a, and a separator 4a. The separator 4a may be disposed between the cathode 3a and the anode 2a, and the cathode 3a, the anode 2a, and the separator 4a may be wound or folded to form a battery structure 7a. The battery structure 7a may be accommodated in the battery case 5a. An electrode tab 8a, acting as an electrical path for guiding an electrical current generated in the battery structure 7a to the outside, may be included. The battery case 5a may be injected with an organic electrolyte and sealed to thereby complete the preparation of the lithium battery 1a. The battery case 5a may have a polygonal shape, but the present disclosure is not necessarily limited thereto, and may also have a cylindrical shape, a thin-film shape, and/or the like, for example.

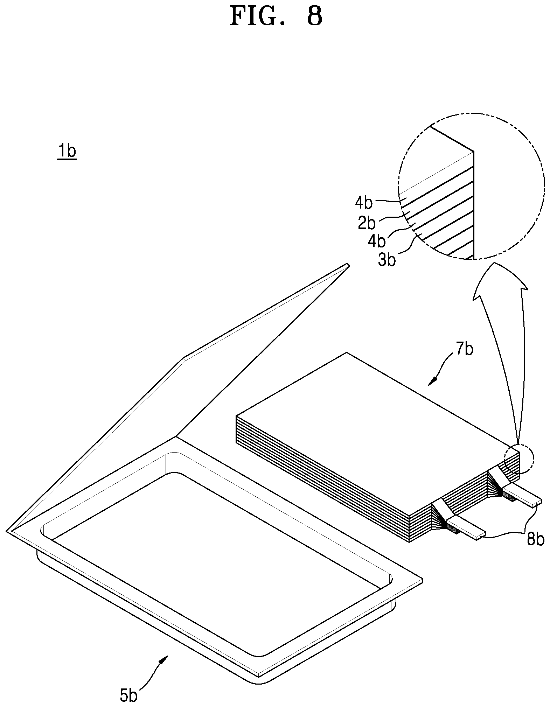

As shown in FIG. 8, a lithium battery 1b includes a cathode 3b, an anode 2b, and a separator 4b. The separator 4b may be disposed between the cathode 3b and the anode 2b to form a battery structure 7b. The battery structure 7b may be stacked in a bi-cell structure and then accommodated into the battery case 5b. An electrode tab 8b, acting as an electrical path for guiding an electrical current generated in the battery structure 7b to the outside, may be included. The battery case 5b may be injected with an organic electrolyte and sealed to thereby complete the preparation of the lithium battery 1b. The battery case 5b may have a polygonal shape, but the present disclosure is not necessarily limited thereto, and may also have a cylindrical shape, a thin-film shape, and/or the like, for example.

A pouch-type or kind lithium battery corresponds to the lithium battery shown in FIGs. 6 to 8 utilizing a pouch as a battery case. The pouch-type or kind lithium battery may include one or more battery structures. The battery structure may be formed by disposing a separator between a cathode and an anode. The battery structures may be stacked in a bi-cell structure, and immersed in an organic electrolyte, and then accommodated and sealed in a pouch, thereby completing the preparation of a pouch-type or kind lithium battery. For example, the cathode, the anode, and the separator described above may be simply stacked in the form of an electrode assembly and then accommodated in a pouch, or may be wound or folded into a jelly roll-type or kind electrode assembly and then accommodated in a pouch. Subsequently, the pouch may be injected with an organic electrolyte and then sealed, thereby completing the preparation of a lithium battery.

The lithium battery, due to having excellent or suitable lifespan characteristics and high-rate capability, may be utilized in an electric vehicle (EV), for example. For example, the lithium battery may be utilized in a hybrid vehicle, such as a plug-in hybrid electric vehicle (PHEV) and/or the like. Also, the lithium battery may be utilized in any field that requires a large amount of energy storage. For example, the lithium battery may be utilized in an electric bicycle, a power tool, and/or the like.

Multiple units of the lithium battery may be stacked together to form a battery module, and multiple units of the battery module may form a battery pack. Such a battery pack may be utilized in all types (kinds) of devices in which high capacity and high output are desired and/or required. For example, the battery pack may be utilized in a laptop computer, a smartphone, an electric vehicle, and/or the like. The battery module may include, for example, a plurality of batteries and a frame holding the batteries. The battery pack may include, for example, a plurality of battery modules and a bus bar connecting these battery modules. The battery module and/or the battery pack may further include a cooling device. A plurality of battery packs may be controlled or selected by a battery management system. The battery management system may include a battery pack, and a battery control device connected to the battery pack.

A method of preparing a dry electrode active material according to embodiments may include: providing a core; providing a composite; and preparing a dry electrode active material by mechanically milling the core and the composite, wherein the composite may include: at least one first metal oxide; and a first carbonaceous material, the first metal oxide may be disposed in a matrix of the first carbonaceous material, the first metal oxide may be represented by $M_aO_b$ ($0<a\leq3$ and $0<b<4$, wherein if (e.g., when) a is 1, 2, or 3, b is not an integer), and M may be at least one metal of (e.g., at least one metal selected from among) Groups 2 to 16 in the Periodic Table of Elements (e.g., at least one metal selected from among Groups 2 to 13, Group 15, and/or Group 16 of the Periodic Table of Elements; or at least one metal selected from Group 13 of the Periodic Table of Elements).

As the core, for example, a lithium transition metal oxide may be provided. For example, the lithium transition metal oxide may be a compound represented by Formula 1 to 8 above.

A composite may be provided. Providing a composite may include, for example, supplying a reaction gas consisting of a carbon source gas to a structure including a metal oxide, and conducting a heat-treatment to provide a composite. Providing a composite may include, for example, supplying a reaction gas consisting of a carbon source gas to at least one second metal oxide represented by $M_aO_c$ ($0<a\leq3$ and $0<c\leq4$, wherein if (e.g., when) a is 1, 2, or 3, b is an integer) and conducting a heat-treatment to prepare a composite, wherein M may be at least one metal of (e.g., at least one metal selected from among) elements of Groups 2 to 16 of the Periodic Table of the Elements, for example, Groups 2 to 13, 15, and/or 16 of the Periodic Table of Elements (e.g., at least one metal selected from Group 13 of the Periodic Table of Elements).

The carbon source gas may be a gas including (e.g., consisting of) a compound represented by Formula 10, or may be at least one mixed gas of (e.g., selected from among) the group including (e.g., consisting of) a compound represented by Formula 10, a compound represented by Formula 11, and/or an oxygen-containing gas represented by Formula 12.

$$\text{Formula 10} \qquad C_nH_{(2n+2-a)}[OH]_a$$

In Formula 10, n may be 1 to 20, and a may be 0 or 1.

$$\text{Formula 11} \qquad C_nH_{2n}$$

In Formula 11, n may be 2 to 6.

$$\text{Formula 12} \qquad C_xH_yO_z$$

In Formula 12, x may be 0 or an integer of 1 to 20, y may be 0 or an integer of 1 to 20, and z may be 1 or 2.

The compound represented by Formula 10 and the compound represented by Formula 11 may be at least one of (e.g., at least one selected from among) methane, ethylene, propylene, methanol, ethanol, and/or propanol. An oxygen-containing gas represented by Formula 12 may include, for example, carbon dioxide ($CO_2$), carbon monoxide (CO), water vapor ($H_2O$), or any suitable mixture thereof.

After supplying a reaction gas consisting of a carbon source gas to a second metal oxide represented by $M_aO_c$

(0<a≤3 and 0<c≤4, wherein if (*e.g.*, when) a is 1, 2, or 3, c is an integer) and conducting a heat treatment, there may be a cooling process further performed utilizing at least one inert gas of (*e.g.*, selected from among) nitrogen, helium, and/or argon. The cooling process may refer to a process of adjusting to room temperature (20 °C to 25 °C). The carbon source gas may include at least one inert gas of (*e.g.*, selected from among) nitrogen, helium, and/or argon.

In the method of preparing a composite, the process of growing a carbonaceous material, *e.g.*, graphene, may be carried out under one or more suitable conditions according to a gas-phase reaction.

According to a first condition, for example, methane may be first supplied to a reactor loaded with a second metal oxide represented by $M_aO_c$ (0<a≤3 and 0<c≤4, wherein if (*e.g.*, when) a is 1, 2, or 3, c is an integer), before elevating the temperature to a heat treatment temperature (T). The heat treatment temperature (T) may be reached over a duration of about 10 minutes to about 4 hours, and the heat treatment temperature (T) may be in a range of about 700 °C to about 1,100 °C. At the heat treatment temperature (T), the heat treatment may be carried out for the duration of a reaction time. The reaction time may be, for example, about 4 hours to about 8 hours. The heat-treated product may be cooled to room temperature to produce a composite. The time taken for the process of cooling from a heat-treatment temperature (T) to room temperature may be, for example, about 1 hour to about 5 hours.

According to a second condition, for example, hydrogen may be first supplied to a reactor loaded with a second metal oxide represented by $M_aO_c$ (0<a≤3 and 0<c≤4, wherein if (*e.g.*, when) a is 1, 2, or 3, c is an integer) before elevating the temperature to a heat treatment temperature (T). The heat treatment temperature (T) may be reached over a duration of about 10 minutes to about 4 hours, and the heat treatment temperature (T) may be in a range of about 700 °C to about 1,100 °C. After performing heat treatment for the duration of a reaction time at the heat treatment temperature (T), methane gas may be supplied and the heat treatment may be carried out for the remainder of the reaction time. The reaction time may be, for example, about 4 hours to about 8 hours. The heat-treated product may be cooled to room temperature to produce a composite. Nitrogen may be supplied during the process of cooling. The time taken for the process of cooling from a heat-treatment temperature (T) to room temperature may be, for example, about 1 hour to about 5 hours.

According to a third condition, for example, hydrogen may be first supplied to a reactor loaded with a second metal oxide represented by $M_aO_c$ (0<a≤3 and 0<c≤4, wherein if (*e.g.*, when) a is 1, 2, or 3, c is an integer), before elevating the temperature to a heat treatment temperature (T). The heat treatment temperature (T) may be reached over a duration of about 10 minutes to about 4 hours, and the heat treatment temperature (T) may be in a range of about 700 °C to about 1,100 °C. After performing a heat treatment for the duration of a reaction time at the heat treatment temperature (T), a mixed gas of methane and hydrogen may be supplied and the heat treatment may be carried out for the remainder of the reaction time. The reaction time may be, for example, about 4 hours to about 8 hours. The heat-treated product may be cooled to room temperature to produce a composite. Nitrogen may be supplied during the cooling process. The time taken for the process of cooling from a heat-treatment temperature (T) to room temperature may be, for example, about 1 hour to about 5 hours.

If (*e.g.*, when) the carbon source gas includes water vapor in the process of producing the composite, the composite with excellent or suitable conductivity may be obtained. The amount of water vapor in the gas mixture is not limited and may be, for example, about 0.01 vol% to about 10 vol%, relative to 100 vol% of the total volume of the carbon source gas. For example, the carbon source gas may be methane; a mixed gas containing methane and an inert gas; or a mixed gas containing methane and an oxygen-containing gas.

For example, the carbon source gas may be methane; a mixed gas of methane and carbon dioxide; or a mixed gas of methane, carbon dioxide and water vapor. In the mixed gas of methane and carbon dioxide, the molar ratio of methane and carbon dioxide may be about 1:0.20 to about 1:0.50, about 1:0.25 to about 1:0.45, or about 1:0.30 to about 1:0.40. In the mixed gas of methane, carbon dioxide, and water vapor, the molar ratio of methane, carbon dioxide, and water vapor may be about 1 : 0.20 to 0.50 : 0.01 to 1.45, may be about 1 : 0.25 to 0.45 : 0.10 to 1.35, or may be about 1 : 0.30 to 0.40 : 0.50 to 1.0.

The carbon source gas may be, for example, carbon monoxide or carbon dioxide. The carbon source gas may be, for example, a mixed gas of methane and nitrogen. In the mixed gas of methane and nitrogen, the molar ratio of methane and nitrogen may be about 1 : 0.20 to 1 : 0.50, about 1 : 0.25 to 1 : 0.45, or about 1 : 0.30 to 1 : 0.40. The carbon source gas may not include (*e.g.*, may exclude) an inert gas such as nitrogen.

A heat treatment pressure may be selected in consideration of a heat treatment temperature, the composition of a gas mixture, a desired or suitable amount of carbon coating, and/or the like. The heat treatment pressure may be controlled or selected by adjusting the incoming amount of the gas mixture and the outgoing amount of the gas mixture. The heat-treatment pressure may be, for example, 0.5 atm or more, 1 atm or more, 2 atm or more, 3 atm or more, 4 atm or more, or 5 atm or more. The heat-treatment pressure may be, for example, about 0.5 atm to about 10 atm, about 1 atm to about 10 atm, about 2 atm to about 10 atm, about 3 atm to about 10 atm, about 4 atm to about 10 atm, or about 5 atm to about 10 atm.

A heat treatment time is not limited and may be appropriately adjusted according to a heat treatment temperature, a heat treatment pressure, the composition of a gas mixture, and a desired or suitable amount of carbon coating. For example, the reaction time at the heat treatment temperature may be, for example, about 10 minutes to about 100 hours, about 30 minutes to about 90 hours, or about 50 minutes to about 40 hours. For example, as the heat-treatment time increases, the amount of deposited carbon, for example, graphene (carbon), increases, and therefore, the electrical properties of the composite may be improved. It should be noted that this trend may not necessarily be directly proportional to time. For example, after a certain period of time, carbon deposition, for example, graphene deposition may no longer take place or the deposition rate may decrease.

Through a gas-phase reaction of the carbon source gas described above, even at relatively low temperatures, the composite may be obtained by providing substantially uniform coating of a carbonaceous material, *e.g.*, graphene coating, to at least one of (*e.g.*, at least one selected from among) a second metal oxide represented by $M_aO_c$ ($0<a\leq3$ and $0<c\leq4$, wherein if (*e.g.*, when) a is 1, 2, or 3, c is an integer) and/or a product of reduction thereof, a first metal oxide represented by $M_aO_b$ ($0<a\leq3$ and $0<b<4$, wherein if (*e.g.*, when) a is 1, 2, or 3, b is not an integer).

The composite may include, for example, a matrix of a carbonaceous material, *e.g.*, a graphene matrix, which has at least one structure of (*e.g.*, selected from among) a spherical structure, a spiral structure having a plurality of spherical structures connected to one another, a cluster structure having a plurality of spherical structures agglomerated, and/or a sponge structure; and at least one of (*e.g.*, at least one selected from among) a first metal oxide represented by $M_aO_b$ ($0<a\leq3$ and $0<b<4$, wherein if (*e.g.*, when) a is 1, 2, or 3, b is not an integer) and a second metal oxide represented by $M_aO_c$ ($0<a\leq3$ and $0<c\leq4$, wherein if (*e.g.*, when) a is 1, 2, or 3, c is an integer), which is disposed within the graphene matrix.

Next, a dry electrode active material may be prepared by mechanically milling the lithium transition metal oxide and the composite. For the milling, a Nobilta mixer and/or the like may be utilized. The rotation rate of the mixer during the milling may be, for example, about 1,000 rpm to about 5,000 rpm. The milling time may be, for example, about 5 minutes to about 100 minutes. The average particle diameter (D50) of the composite utilized for mechanical milling of the lithium transition metal oxide and the composite may be, for example, about 50 nm to about 200 nm, about 100 nm to about 300 nm, or about 200 nm to about 500 nm. The milling method utilized in the mechanical milling process is not limited, and may be any suitable method available in the art that can bring a lithium transition metal oxide and a composite into contact with each other by mechanical means.

The present disclosure will be described in greater detail through the Examples and Comparative Examples below. However, it will be understood that the following examples are provided merely to illustrate the present disclosure, and should not be construed as limiting the scope of the present disclosure.

**Preparation of Composite**

**Preparation Example 1: Al$_2$O$_3$@Gr composite**

Al$_2$O$_3$ particles (average particle diameter: about 15 nm) were loaded into a reactor, and with CH$_4$ being supplied into the reactor at 300 sccm and 1 atm for about 30 minutes, the temperature inside the reactor was elevated to 1,000 °C.

Subsequently, a heat treatment was performed by maintaining the above temperature for 7 hours. Then, the temperature inside the reactor was adjusted to room temperature (20-25 °C) to obtain a composite in which Al$_2$O$_3$ particles and a product of reduction thereof, Al$_2$O$_z$ ($0<z<3$) particles, are embedded in graphene.

The amount of aluminium oxide (Al$_2$O$_3$ particles and the reduction product thereof, Al$_2$O$_z$ ($0<z<3$) particles) included in the composite was 60 wt%.

**Preparation of Composite Cathode Active Material**

**Preparation Example 2: Large-diameter NCA91 coated with 0.4 wt% Al$_2$O$_3$@Gr composite 0.24 wt% aluminium oxide**

LiNi$_{0.91}$Co$_{0.05}$Al$_{0.04}$O$_2$ having an average particle diameter (D50) of 14 $\mu$m (hereinafter, referred to as NCA91) and the composite prepared in Preparation Example 1 were milled utilizing a Nobilta mixer (Hosokawa, Japan) for about 5 minutes to about 30 minutes at a rotation rate of about 1,000 to 2,000 rpm, to obtain a composite cathode active material. The mixing weight ratio of NCA91 to the composite prepared in Preparation Example 1 was 99.6 : 0.4.

**Preparation Example 3: Small-diameter NCA91 coated with 0.4 wt% Al$_2$O$_3$@Gr composite 0.24 wt% aluminium oxide**

LiNi$_{0.91}$Co$_{0.05}$Al$_{0.04}$O$_2$ having an average particle diameter (D50) of 3.5 $\mu$m (hereinafter, referred to as NCA91) and the composite prepared in Preparation Example 1 were milled utilizing a Nobilta mixer (Hosokawa, Japan) for about 5 minutes to about 30 minutes at a rotation rate of about 1,000 to 2,000 rpm, to obtain a composite cathode active material. The mixing weight ratio of NCA91 and the composite prepared in Preparation Example 1 was 99.6 : 0.4.

**Preparation Example 4: Large-diameter NCA91 coated with 0.2 wt% Al$_2$O$_3$@Gr composite 0.12 wt% aluminium oxide and 0.05 wt% CNT**

LiNi$_{0.91}$Co$_{0.05}$Al$_{0.04}$O$_2$ having an average particle diameter (D50) of 14 $\mu$m (hereinafter, referred to as NCA91), the composite prepared in Preparation Example 1, and carbon nanotubes (hereinafter referred to as CNTs) were milled utilizing a Nobilta mixer (Hosokawa, Japan) for about 5 minutes to about 30 minutes at a rotation rate of about 1,000 rpm to about 2,000 rpm to obtain a composite cathode active material. The NCA91, the composite, and the CNTs were mixed in a ratio (*e.g.*, amount) of 99.75 : 0.2 : 0.05 to prepare a composite cathode active material.

The carbon nanotubes included a primary carbon nanotube structure and a secondary carbon nanotube structure formed by agglomeration of a plurality of carbon nanotube units.

The primary carbon nanotube structure may include (*e.g.*, consist of) one carbon nanotube unit. The length of the primary carbon nanotube unit was from 200 nm to 300 nm, and the diameter (average diameter) of the carbon nanotubes was about 10 nm.

The secondary carbon nanotube structure was formed by agglomeration of a plurality of carbon nanotube units. The secondary carbon nanotube structure had a length of 500 nm or more, and a diameter (average diameter) of about 40 nm.

**Comparative Preparation Example 1: Large-diameter bare NCA91**

LiNi$_{0.91}$Co$_{0.05}$Al$_{0.04}$O$_2$ (hereinafter referred to as NCA91) having an average particle diameter (D50) of 14 $\mu$m was utilized as is as a composite cathode active material.

**Preparation of Lithium Battery Half-Cell**

**Example 1: Dry cathode film, dry anode, 0.5 wt% LiNO$_3$, 0.5 wt% SN**

**Preparation of Dry Cathode Film and Dry Anode**

The composite cathode active material prepared in Preparation Example 2, LiNOs as a first lithium salt compound, succinonitrile as a nitrile group-containing compound, a dry carbon conductive material, and polytetrafluoroethylene (PTFE) as a dry binder were loaded in a blade mixer in a weight ratio of 95 : 0.5 : 0.5 : 2 : 2, and subjected to first dry mixing at 25 °C, at a rate of 1,200 rpm for 10 minutes to prepare a first dry mixture in which the dry cathode active material, the dry conductive material, and the dry binder were uniformly (substantially uniformly) mixed. The dry carbon conductive material utilized was a mixture containing carbon nanotubes (CNT) and Ketjen black (ECP) in a weight ratio of 7 : 3. Subsequently, to allow the binder fibrillation process to proceed, the first dry mixture was further subjected to second mixing at 25 °C at a rate of 4,000 rpm for 25 minutes, utilizing a blade mixer, to prepare a second dry mixture.

In the preparation of the first dry mixture and the second dry mixture, no separate solvent was utilized.

The prepared second dry mixture was introduced into an extruder and extruded to prepare a dry cathode film in a sheet form. The dry electrode film was a self-standing film.

The prepared self-standing dry cathode film was rolled. The pressure during rolling was 3.5 ton/cm$^2$. The thickness of the rolled dry cathode film was about 150 $\mu$m.

A cathode current collector having a 25 $\mu$m-thick aluminium thin film coated with a carbon layer on one side thereof was prepared.

The carbon layer was prepared by coating and drying a composition containing Denka black and polyvinylidene fluoride (PVDF). The thickness of the carbon layer disposed on one side of the cathode current collector was about 1 $\mu$m.

A dry cathode was prepared by placing the rolled dry cathode film on one side of the cathode current collector.

**Preparation of Coin Cells**

A coin cell was prepared utilizing the cathode prepared above, and utilizing lithium metal as a counter electrode, a polytetrafluoroethylene (PTFE) separator, and a solution containing 1.3 M LiPF$_6$ dissolved in ethylene carbonate (EC) + ethyl methyl carbonate (EMC) + dimethyl carbonate (DMC) (volume ratio of 3:4:3) as an electrolyte.

**Example 2: Dry cathode film, dry cathode, 0.7 wt% LiNO$_3$, 0.3 wt% SN**

A dry cathode film, a dry cathode, and a lithium battery were prepared following substantially the same process as Example 1, except that the dry composite cathode active material prepared in Preparation Example 2, LiNOs as a first lithium salt compound, a succinonitrile as a nitrile group-containing compound, a dry carbon conductive material, and polytetrafluoroethylene (PTFE) as a dry binder were mixed in a weight ratio of 95 : 0.7 : 0.3 : 2 : 2.

**Example 3: Dry cathode film, dry cathode, 0.3 wt% LiNO$_3$, 0.7 wt% SN**

A dry cathode film, a dry cathode, and a lithium battery were prepared following substantially the same process as Example 1, except that the dry composite cathode active material prepared in Preparation Example 2, LiNOs as a first lithium salt compound, a succinonitrile as a nitrile group-containing compound, a dry carbon conductive material, and polytetrafluoroethylene (PTFE) as a dry binder were mixed in a weight ratio of 95 : 0.3 : 0.7 : 2 : 2.

**Example 4: Dry cathode film, dry cathode, 1 wt% LiNO$_3$, 0 wt% SN**

A dry cathode film, a dry cathode, and a lithium battery were prepared following substantially the same process as Example 1, except that the dry composite cathode active material prepared in Preparation Example 2, LiNOs as a first lithium salt compound, a succinonitrile as a nitrile group-containing compound, a dry carbon conductive material, and polytetrafluoroethylene (PTFE) as a dry binder were mixed in a weight ratio of 95 : 1 : 0 : 2 : 2.

**Example 5: Dry cathode film, dry cathode, 0 wt% LiNO$_3$, 1 wt% SN**

A dry cathode film, a dry cathode, and a lithium battery were prepared following substantially the same process as Example 1, except that the dry composite cathode active material prepared in Preparation Example 2, LiNOs as a first lithium salt compound, a succinonitrile as a nitrile group-containing compound, a dry carbon conductive material, and polytetrafluoroethylene (PTFE) as a dry binder were mixed in a weight ratio of 95 : 0 : 1 : 2 : 2.

**Example 6: Bimodal dry cathode active material, dry cathode film, dry cathode, 0.5 wt% LiNO$_3$, 0.5 wt% SN**

A dry electrode film, a dry cathode, and a coin cell were prepared following substantially the same process as in Example 1, except that a mixture containing the composite cathode active material prepared in Preparation Example 2 (large-diameter dry composite cathode active material) and the dry composite cathode active material prepared in Preparation Example 3 (small-diameter dry composite cathode active material) in a weight ratio of 7 : 3 were utilized in place of the composite cathode active material prepared in Preparation Example 2.

**Example 7: CNT-added composite cathode active material, dry cathode film, dry cathode, 0.5 wt% LiNO$_3$, 0.5 wt% SN**

A dry cathode film, a dry cathode, and a coin cell were prepared following substantially the same process as in Example 1, except that the dry composite cathode active material prepared in Preparation Example 4 was utilized in place of the dry composite cathode active material prepared in Preparation Example 2.

**Reference Example 1: Dry cathode film, dry cathode, 0 wt% LiNO$_3$, 0 wt% SN**

A dry cathode film, a dry cathode, and a lithium battery were prepared following substantially the same process as Example 1, except that the dry composite cathode active material prepared in Preparation Example 2, LiNOs as a first lithium salt compound, a succinonitrile as a nitrile group-containing compound, a dry carbon conductive material, and polytetrafluoroethylene (PTFE) as a dry binder were mixed in a weight ratio of 95 : 0 : 0 : 2 : 2. LiNOs and succinonitrile were not utilized.

**Comparative Example 1: Dry cathode, bare NCA91 cathode active material**

A dry cathode film, a dry cathode, and a coin cell were prepared following substantially the same process as in Reference Example 1, except that the LiNi$_{0.91}$Co$_{0.05}$Al$_{0.04}$O$_2$ (hereinafter referred to as NCA91) prepared in Comparative Preparation Example 1 was utilized in place of the dry composite cathode active material prepared in Preparation Example 2.

**Comparative Example 2: Wet cathode, bare NCA91 cathode active material**

**Preparation of Cathode**

A mixture containing $LiNi_{0.91}Co_{0.05}Al_{0.04}O_2$ (hereinafter, referred to as NCA91) having an average particle diameter (D50) of 14 $\mu$m, a carbon conductive agent, and polyvinylidene fluoride (PVDF) in a weight ratio of 96:2:2 was mixed with N-methyl pyrrolidone (NMP) in an agate mortar to prepare a cathode active material slurry. The dry carbon conductive material utilized was a mixture containing carbon nanotubes (CNT) and Ketjen black (ECP) in a weight ratio of 7:3.

The cathode active material slurry was bar-coated on one side of a prepared 30 $\mu$m-thick cathode current collector, and dried at room temperature and dried again under vacuum at 120 °C, to prepare a stack.

The prepared laminate was rolled to prepare a cathode having a cathode active material layer disposed on the cathode current collector. The pressure during rolling was 3.5 ton/cm$^2$. The thickness of the cathode active material layer was about 200 $\mu$m.

**Preparation of Coin Cells**

Coin cells were prepared following substantially the same process as Example 1, except that the cathode prepared above was utilized.

**Preparation of Lithium Battery Half-Cell Including Thick-Film Electrode**

**Example 8: Dry electrode film with 10 mAh/cm$^2$ areal capacity**

A dry cathode film, a dry electrode, and a coin cell were prepared following substantially the same process as Example 1 except that the areal capacity of the dry electrode film was altered to about 10 mAh/cm$^2$ by increasing the thickness of the dry electrode film.

**Reference Example 2: Dry electrode film with 10 mAh/cm$^2$ areal capacity**

A dry cathode film, a dry cathode, and a lithium battery were prepared following substantially the same process as Example 8, except that the dry composite cathode active material prepared in Preparation Example 2, LiNOs as a first lithium salt compound, a succinonitrile as a nitrile group-containing compound, a dry carbon conductive material, and polytetrafluoroethylene (PTFE) as a dry binder were mixed in a weight ratio of 95 : 0 : 0 : 2 : 2. LiNOs and succinonitrile were not utilized.

**Evaluation Example 1: Mass spectroscopy**

Using Time-of-Flight Secondary Ion Mass Spectrometry (TOF-SIMS, Shimadzu), the presence of nitrogen-containing anions in the dry cathode films prepared in Example 1 and Reference Example 1 was checked. The measurement results are shown in FIGs. 1A to 1C.

As shown in FIGs. 1A to 1C, the dry cathode film prepared in Example 1 shows a peak corresponding to $NO_3^-$ near m/z=62, a peak corresponding to $NO_2^-$ near m/z=46, and a peak corresponding to $NO^-$ near m/z=30, respectively.

The dry cathode film prepared in Reference Example 1 showed few or no peaks.

Therefore, it was confirmed that the dry cathode film prepared in Example 1 contained nitrogen-containing anions, and the dry cathode film prepared in Reference Example 1 did not contain nitrogen-containing anions.

**Evaluation Example 2: Evaluation of charge transfer activation energy**

Using an impedance analyzer (Solartron 1400A/1455A impedance analyzer), the dry cathode films and the lithium batteries prepared in Example 1 and Reference Example 1 were measured for the impedance of the dry cathode films by a two-probe method.

The frequency range was 0.1 Hz to 1 MHz, and the amplitude voltage was 10 mV. Charge transfer resistance ($R_{ct}$) was calculated from a Nyquist plot of the impedance measurement.

Using Arrhenius equations in Equation 1 and Equation 1A, $\ln(1/R_{ct})$ vs. 1/T graph was plotted from temperature-dependent charge transfer resistance data, and charge transfer activation energy ($E_a$) was calculated from the slope ($-E_a/R$) of this graph.

The measurement results are shown in Table 1.

Equation 1

$$1/R_{ct} = A \exp(-E_a/RT)$$

Equation 1A

$$\ln(1/R_{ct}) = \ln A - (E_a/R)*(1/T)$$

In Equations 1 and 1A, $R_{ct}$ represents charge transfer resistance, A represents a pre-exponential factor, $E_a$ represents charge transfer activation energy, R represents the gas constant, and T represents absolute temperature.

Table 1

| | Activation energy [kJ/mol] |
|---|---|
| Example 1 (LiNO$_3$ 0.5 wt% + SN 0.5 wt%) | 10.64 |
| Reference Example 1 (LiNO$_3$ 0 wt% + SN 0 wt%) | 16.5 |

As shown in Table 1, the charge transfer activation energy of the lithium battery containing the dry electrode film of Example 1 was lower than the charge transfer activation energy of the lithium battery containing the dry electrode film of Reference Example 1.

For example, it was confirmed that the charge transfer resistance between the dry electrode and the electrolyte in the lithium battery of Example 1 was lower than the charge transfer resistance between the dry electrode and the electrolyte in the lithium battery of Reference Example 1.

It was considered to be due to a decreased interfacial resistance between the dry electrode film and the electrolyte because the dry electrode film of Example 1 contains the first lithium salt compound and the nitrile group-containing compound.

It was also considered to be due to no decrease in the interfacial resistance between the dry electrode film and the electrolyte because the dry electrode film of Reference Example 1 did not include the first lithium salt compound and the nitrile group-containing compound.

**Evaluation Example 3: Evaluation of resistance of thick-film electrode**

Using an impedance analyzer (Solartron 1400A/1455A), the lithium batteries prepared utilizing the dry cathode films of Example 8 and Reference Example 2, each having an areal capacity of 10 mAh/cm$^2$, respectively, were analyzed to measure the impedance of the dry cathode films by a 2-probe method. The frequency range was 0.1 Hz to 1 MHz, and the amplitude voltage was 10 mV. Measurements were made in ambient atmosphere at 25 °C. $R_{ion}$ and $R_{ct}$ were calculated from the Nyquist plot of the impedance measurement. $R_{ion}$ and $R_{ct}$ were measured utilizing the methods disclosed in J. Phys. Chem. C, 2015, 119(9), 4612-4619, which is hereby incorporated by reference. The results of measurement are shown in Table 2.

Table 2

| Areal capacity 10 mAh/cm2 | $R_{ct}$ [ohm·cm$^2$] | $R_{ion}$ [ohm·cm$^2$] | $R_{ct}$ - $R_{ion}$ [ohm·cm$^2$] |
|---|---|---|---|
| Example 8 (LiNO$_3$ 0.5 wt% + SN 0.5 wt%) | 26 | 21 | 5 |
| Reference Example 2 (LiNO$_3$ 0 wt% + SN 0 wt%) | 33 | 23 | 10 |

As shown in Table 2, in the lithium battery of Example 8, an increase in charge transfer resistance was more inhibited or reduced than in the lithium battery of Reference Example 2.

The difference between the charge transfer resistance and the ion resistance in the lithium battery of Example 8 was less than the difference between the charge transfer resistance and the ion resistance in the lithium battery of Reference Example 2.

This result was considered to be attributable to the fact that, despite an increase in the areal capacity of the dry electrode film (e.g., increased thickness of the electrode film), increases in the interfacial resistance between the dry electrode film and the electrolyte in the dry electrode film of Example 8 was inhibited or reduced due to the first lithium salt compound and the nitrile group-containing compound included therein.

**Evaluation Example 4: XPS spectrum evaluation**

In the preparation process of the composite prepared in Preparation Example 1, XPS spectra were measured utilizing a Quantum 2000 (Physical Electronics) over time. XPS spectra of the C 1s orbital and Al 2p orbital of each sample before temperature elevation, and at 1 minute, 5 minutes, 30 minutes, 1 hour, and 4 hours after temperature elevation, were obtained. At the beginning of temperature elevation, the XPS spectrum only shows Al 2p peaks but does not show C 1s peaks. After 30 minutes, C 1s peaks appeared clearly, and the size of Al 2p peak was significantly reduced.

After 30 minutes, C 1s peaks attributable to C-C bonds and C=C bonds due to graphene growth appeared clearly around 284.5 eV.

Because the oxidation number of aluminium decreases as the reaction time increases, the peak position of the Al 2p orbital was shifted toward a lower binding energy (eV).

Therefore, it was found that as the reaction progressed, graphene was grown on $Al_2O_3$ particles, and $Al_2O_x$ (0<x<3), which is a product of reduction of $Al_2O_3$, was produced.

The average contents of carbon and aluminium were measured through XPS analysis results in 10 regions of the composite sample prepared in Preparation Example 1. With respect to the measurement results, a deviation of the aluminium content (e.g., amount) for each region was calculated. The deviation of the aluminium content (e.g., amount) was expressed as a percentage of the average value, and this percentage was referred to as uniformity. The percentage of the average value of the deviation of the aluminium content (*e.g.*, amount), that is, the uniformity of the aluminium content (*e.g.*, amount) was 1%. Therefore, it was found that aluminium oxide was uniformly (substantially uniformly) distributed in the composite prepared in Preparation Example 1.

**Evaluation Example 5: SEM, HR-TEM and SEM-EDS analyses**

The composite prepared in Preparation Example 1, the composite cathode active material prepared in Preparation Example 2, and the bare NCA91 prepared in Comparative Preparation Example 1 were analyzed by scanning electron microscopy, high-resolution transmission electron microscopy, and energy-dispersive X-ray spectroscopy (EDS). For SEM-EDAX analysis, a FEI Titan 80-300 of Philips Corporation was utilized.

The composite prepared in Preparation Example 1 shows a structure in which $Al_2O_3$ particles and $Al_2O_z$ (0<z<3) particles as a product of reduction thereof are embedded in graphene. It was found that a graphene layer was disposed on the outside of at least one of $Al_2O_3$ particles and/or $Al_2O_z$ (0<z<3) particles. The at least one of $Al_2O_3$ particles and/or $Al_2O_z$ (0<z<3) particles was uniformly (substantially uniformly distributed within the graphene matrix. The at least one of $Al_2O_3$ particles and/or $Al_2O_z$ (0<z<3) particles was found to have a particle diameter of about 20 nm. The particle diameter of the composite prepared in Preparation Example 1 was about 50 nm to about 200 nm.

The SEM-EDS mapping analysis of the bare large-diameter NCA91 of Comparative Preparation Example 1 and the first core/shell structure prepared in Preparation Example 2 shows that the concentration of aluminium (Al) distributed on the surface of the 1st core/shell structure of Preparation Example 2 was higher than on the surface of the bare NCA91 of Comparative Preparation Example 1. It was confirmed that on the large-diameter NCA91 core in the 1st core/shell structure of Preparation Example 2, the composite prepared in Preparation Example 1 was coated, forming a shell.

**Evaluation Example 6: XPS spectrum evaluation Graphene-NCA chemical bond**

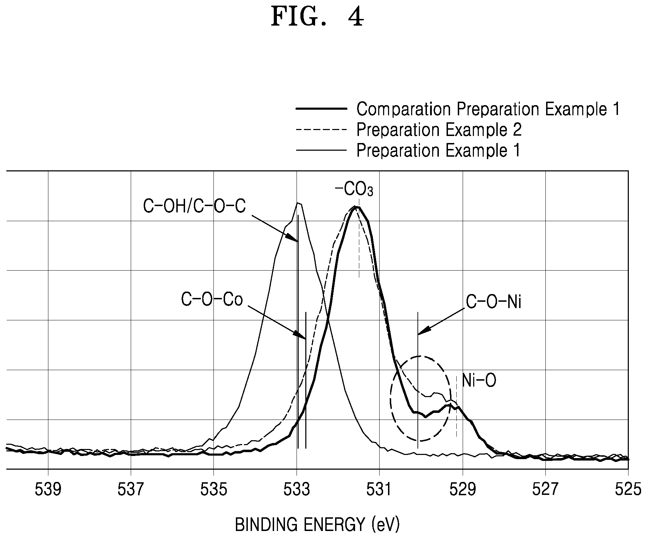

Using Quantum 2000 (Physical Electronics), the O 1s XPS spectra of the composite prepared in Preparation Example 1, the bare large-diameter NCA91 of Comparative Preparation Example 1, and the composite cathode active material prepared in Preparation Example 2 were obtained, and the results thereof are shown in FIG. 4.

As shown in FIG. 4, in the composite cathode active material of Preparation Example 2, a peak ascribed to C-O-Ni bond was observed near 530.2 eV. This peak was considered to be attributable to bonds formed between the carbons in graphene and a NiO phase present on the NCA91 surface. Therefore, it was confirmed that the graphene included in the shell formed on the core forms a covalent bond with the transition metal, Ni, included in the core.

**Evaluation Example 7: Raman spectrum evaluation Graphene-NCA chemical Bond**

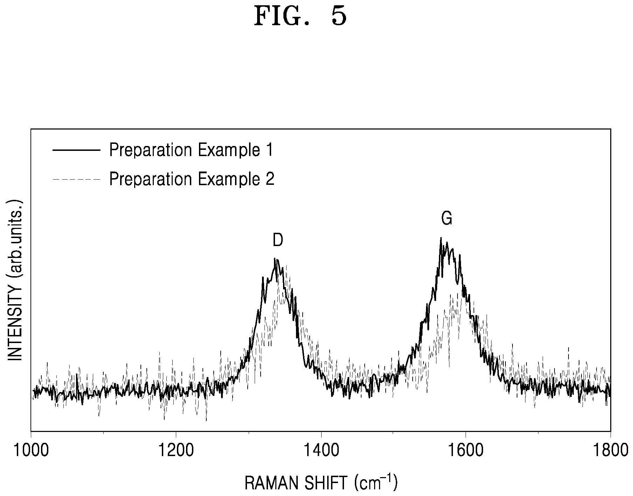

Raman spectra were obtained of the composite prepared in Preparation Example 1, and the composite cathode active material prepared in Preparation Example 2, and the results thereof are shown in FIG. 5.

As shown in FIG. 5, the composite prepared in Preparation Example 1 shows a D-band peak at 1338.7 cm$^{-1}$

and a G-band peak at 1575.0 cm$^{-1}$, attributable to graphene.

In the composite cathode active material of Preparation Example 2, due to the shell containing graphene, the D-band peak was shifted to 1351.3 cm$^{-1}$ by about 12 cm$^{-1}$ and the G-band peak was shifted to 1593.6 cm$^{-1}$ by about 18 cm$^{-1}$.

The shift of the D-band peak was considered to be due to a strain in the graphene that binds to the core to form the shell by milling.

The shift of the G-band peak was considered to be due to a charge transfer between the graphene and the core in the composite as the core and the graphene forms the composite via C-O-Ni bonds.

Therefore, it was confirmed that the graphene included in the shell formed on the core forms a covalent bond with the transition metal, Ni, included in the core.

**Evaluation Example 8: Tensile strength evaluation**

From each of the dry cathode films prepared in Example 1 and Comparative Example 1, a sample for tensile strength testing according to ASTM D 638 (216 mm (Length) × 19±0.5 mm (Width) × 3.18±0.38 mm (Depth)) was prepared. Tensile strength was measured by performing a tensile strength test in accordance with ASTM D 638 method. The results of measurement are shown in Table 3. The wet cathode of Comparative Example 2 failed to form a self-standing film and thus was unavailable for tensile strength measurement.

Table 3

| | Tensile strength [kPa] |
|---|---|
| Example 1 Dry cathode containing Al$_2$O$_3$@Gr composite-coated cathode active material, 0.5 wt% LiNO$_3$ + 0.5 wt% SN | 800.2 |
| Comparative Example 1 Dry cathode containing bare NCA91, 0 wt% LiNO$_3$ + 0 wt% SN | 649.3 |
| Comparative Example 2 Wet cathode containing bare NCA91, 0 wt% LiNO$_3$ + 0 wt% SN | - |

As shown in Table 3, the dry cathode film of Example 1 shows improved mechanical strength relative to the dry cathode film of Comparative Example 1.

This result was considered to be attributable to the fact that the fibrillized binder binds the composite cathode active material more effectively in the dry cathode film of Example 1 than in the dry cathode film of Comparative Example 1.

This result was considered to be attributable to the fact that the carbon layer coated on the lithium transition metal oxide core of the composite cathode active material in the dry cathode of Example 1 allows the fibrillized binder to bind more effectively to the carbon layer than to the lithium metal oxide.

**Evaluation Example 9: Evaluation of room-temperature (25 °C) high-rate capability**

The lithium batteries prepared in Examples 1 to 5, Reference Example 1, and Comparative Example 1 were each charged at a constant current of 0.1 C (e.g., C rate) at 25 °C until the battery voltage reached 4.3 V (vs. Li) and then, while maintaining 4.3 V in a constant voltage mode, the charging was cut-off at a current of 0.05 C. Subsequently, the battery was discharged at a constant current of 0.1 C until the battery voltage reached 2.8 V (vs. Li) during discharge (1$^{st}$ cycle).

The lithium batteries after the formation cycle were each charged at 25 °C at a constant current of 0.5 C until the battery voltage reached 4.3 V (vs. Li) and then, while maintaining 4.3 V in a constant voltage mode, the charging was cut-off at a current of 0.05 C. Subsequently, the battery was discharged at a constant current of 0.2 C until the battery voltage reached 2.8 V (vs. Li) during discharge (2$^{nd}$ cycle).

The lithium batteries after the 2$^{nd}$ cycle were each charged at 25 °C at a constant current of 0.5 C until the battery voltage reached 4.3 V (vs. Li) and then, while maintaining 4.3 V in a constant voltage mode, the charging was cut-off at a current of 0.05 C. Subsequently, the battery was discharged at a constant current of 0.5 C until the battery voltage reached 2.8 V (vs. Li) during discharge (3$^{rd}$ cycle).

In the 4$^{th}$ cycle and the 5$^{th}$ cycle, charging and discharging were carried out under the same conditions as the 3$^{rd}$ cycle (4$^{th}$ cycle and 5$^{th}$ cycle).

The lithium batteries after the 5$^{th}$ cycle were each charged at 25 °C at a constant current of 0.5 C until the battery voltage reached 4.3 V (vs. Li) and then, while maintaining 4.3 V in a constant voltage mode, the charging was cut-off at a current of 0.05 C. Subsequently, the lithium batteries were each discharged at a constant current of 1.0 C until the battery voltage reached 2.8 V (vs. Li) during discharge (6$^{th}$ cycle).

In the 7th cycle and the 8th cycle, charging and discharging were carried out under the same conditions as the 6th cycle (7th cycle and 8th cycle).

The lithium batteries after the 8th cycle were each charged at 25 °C at a constant current of 0.5 C until the battery voltage reached 4.3 V (vs. Li) and then, while maintaining 4.3 V in a constant voltage mode, the charging was cut-off at a current of 0.05 C. Subsequently, the lithium batteries were each discharged at a constant current of 2.0 C until the battery voltage reached 2.8 V (vs. Li) during discharge (9th cycle).

In the 10th cycle and the 11th cycle, charging and discharging were carried out under the same conditions as the 9th cycle (10th cycle and 11th cycle).

The lithium batteries after the 11th cycle were each charged at 25 °C at a constant current of 0.5 C until the battery voltage reached 4.3 V (vs. Li) and then, while maintaining 4.3 V in a constant voltage mode, the charging was cut-off at a current of 0.05 C. Subsequently, the battery was discharged at a constant current of 0.5 C until the battery voltage reached 2.8 V (vs. Li) during discharge (12th cycle).

In the 13th cycle and the 14th cycle, charging and discharging were carried out under the same conditions as the 12th cycle (13th cycle and 14th cycle).

Throughout the charge-discharge cycles above, a rest period of 10 minutes was provided after each charge/discharge cycle. A part of the high-rate capability test results is shown in Table 4. High-rate capability is defined by Equation 4.

$$\text{High-Rate Capability [\%]} = [\text{Discharge Capacity at 2.0 C (Discharge Capacity in 10th cycle)} / \text{Discharge Capacity at 0.2 C (Discharge Capacity in 2nd cycle)}] \times 100 \quad \text{equation 4}$$

Table 4

| | High-Rate Capability [%] |
|---|---|
| Example 1 Dry cathode containing 0.4 wt% $Al_2O_3$@Gr composite-coated cathode active material, 0.5 wt% $LiNO_3$ + 0.5 wt% SN | 55 |
| Example 2 Dry cathode containing 0.4 wt% $Al_2O_3$@Gr composite-coated cathode active material, 0.7 wt% $LiNO_3$ + 0.3 wt% SN | 53.2 |
| Example 3 Dry cathode containing 0.4 wt% $Al_2O_3$@Gr composite-coated cathode active material, 0.3 wt% $LiNO_3$ + 0.7 wt% SN | 56 |
| Example 4 Dry cathode containing 0.4 wt% $Al_2O_3$@Gr composite-coated cathode active material, 1.0 wt% $LiNO_3$ + 0 wt% SN | 52.5 |
| Example 5 Dry cathode containing 0.4 wt% $Al_2O_3$@Gr composite-coated cathode active material, 0 wt% $LiNO_3$ + 1.0 wt% SN | 54.2 |
| Reference Example 1 Dry cathode containing 0.4 wt% $Al_2O_3$@Gr composite-coated cathode active material, 0 wt% $LiNO_3$ + 0 wt% SN | 25 |
| Comparative Example 1 Dry cathode containing bare NCA91, 0 wt% $LiNO_3$ + 0 wt% SN | 23 |

As shown in Table 4, the lithium batteries of Examples 1 to 5 show improved high-rate capability compared to the lithium batteries of Reference Example 1 and Comparative Example 1.

**Evaluation Example 10: Evaluation of room-temperature (25 °C) charge/discharge characteristics**

The lithium batteries prepared in Examples 1 to 7, Reference Example 1, and Comparative Examples 1 and 2 were each charged at a constant current of 0.1 C at 25 °C until the battery voltage reached 4.3 V (vs. Li) and then while maintaining 4.3 V in a constant voltage mode, the charging was cut-off at a current of 0.05 C. Subsequently, the battery was discharged at a constant current rate of 0.1 C until the battery voltage reached 2.8 V (vs. Li) during discharge (formation cycle).

The lithium batteries after the formation cycle were each charged at a constant current of 0.5 C at 25 °C until the battery voltage reached 4.3 V (vs. Li) and then, the charging was cut-off at a current of 0.05 C while maintaining 4.3 V in a constant voltage mode. Subsequently, the battery was discharged at a constant current of 0.5 C until the battery voltage reached 2.8 V during discharge (1st cycle). This cycle was repeated under the same conditions up to the 350th

cycle.

Throughout the charge-discharge cycles above, a rest period of 10 minutes was provided after each charge/discharge cycle. A part of the room-temperature charge-discharge test results is shown in Table 5. Capacity retention is defined by Equation 5.

Capacity Retention [%] = [Discharge Capacity in 350th cycle / Discharge Capacity in 1st cycle] $\times$ 100      equation 5

Table 5

| | Capacity Retention [%] |
|---|---|
| Example 1 Dry cathode containing 0.4 wt% Al$_2$O$_3$@Gr composite-coated cathode active material, 0.5 wt% LiNO$_3$ + 0.5 wt% SN | 91.2 |
| Example 6 Dry cathode containing 0.4 wt% Al$_2$O$_3$@Gr composite-coated cathode active material, bimodal active material, 0.5 wt% LiNO$_3$ + 0.5 wt% SN | 94.2 |
| Example 7 Dry cathode containing 0.2 wt% Al$_2$O$_3$@Gr composite + 0.05 wt% CNT-coated cathode active material, 0.5 wt % LiNO$_3$ + 0.5 wt % SN | 94.6 |
| Reference Example 1 Dry cathode containing 0.4 wt% Al$_2$O$_3$@Gr composite-coated cathode active material, 0 wt% LiNO$_3$ + 0 wt% SN | 88 |
| Comparative Example 1 Dry cathode containing bare NCA91, 0 wt% LiNO$_3$ + 0 wt% SN | 80 |
| Comparative Example 2 Wet cathode containing bare NCA91, 0 wt% LiNO$_3$ + 0 wt% SN | 85 |

As shown in Table 5, the lithium batteries of Examples 1, and Examples 6 and 7 show improved lifespan characteristics compared to the lithium batteries of Reference Example 1 and Comparative Examples 1 and 2.

The lithium batteries of Examples 6 and 7 show further improved lifespan characteristics compared to the lithium battery of Example 1.

**Evaluation Example 11: Evaluation of vertical binding force of cathode active material layer I**

Using SAICAS (SAICAS EN-EX, Daipla Wintes, JAPAN), binding characteristics of the cathode active material layers of the dry cathode of Example 1 and the wet cathode prepared in Comparative Example 2 were analyzed.

With a 1 mm-wide diamond blade, a constant speed analysis was performed to measure a vertical binding force (Fv) according to depth (clearance angle = 10°; rake angle = 20°; shear angle = 45°; horizontal velocity = 4 $\mu$m/s; and vertical velocity = 0.4 $\mu$m/s).

First, a first constant speed analysis was performed from a first position on the surface of the composite cathode active material to the surface of the cathode current collector, and the cathode active material layer was removed by moving the blade horizontally along the surface of the cathode current collector. Then, at a position moved back by 10 $\mu$m from the first position, a second constant-speed analysis was performed under the same conditions as the first constant-speed analysis. The data obtained from the second constant-speed analysis were utilized.

In the cathode active material layer, a vertical binding force of the cathode active material layer was measured, and the measurement data were normalized to binding force graph areas to derive a vertical relative binding force ($F_{VR}$) according to depth of the cathode active material layer.

The data measured from a section between a first point, which is 5 % away from the surface of cathode active material layer, and a second point, which is 5 % away from the surface of the electrode current collector with respect to the total thickness of the cathode active material layer, was utilized for the vertical binding force of the cathode active material layer. Data near the surface of cathode active material layer and the surface of electrode current collector were excluded (*e.g.*, not included) in order to avoid measurement errors.

Using Equation 2, a change in vertical binding force ($F_{VR}$) was calculated from the derived vertical relative binding force ($F_{VR}$) data of the cathode active material layer. Further, arithmetic mean values were calculated from the derived vertical relative binding force ($F_{VR}$) data of the cathode active material layer.

Change in Vertical Relative Binding Force ($F_{VR}$) = [(Maximum Vertical Relative Binding Force - Minimum Vertical Relative Binding Force) / Minimum Vertical Relative Binding Force] $\times$ 100      equation 2

The result of measurement shows that the change in vertical relative binding force of the cathode active material layer included in the dry cathode of Example 1 was 200 % or less.

Thus, it was found that the cathode active material layer (*e.g.*, dry electrode film) of Example 1 has substantially uniform binding force and composition distributions regardless of the position in a thickness direction of the cathode active material layer.

In addition it was found that the change in vertical relative binding force of the cathode active material layer included in the wet cathode of Comparative Example 2 was more than 400 %.

It was found that the cathode active material layer of Comparative Example 2 has a binding force and composition distribution that significantly vary, depending on the position in a thickness direction of the cathode active material layer.

**Evaluation Example 12: Evaluation of horizontal binding force of cathode active**

**material layer II**

Using SAICAS (SAICAS EN-EX, Daipla Wintes, JAPAN), binding characteristics of the cathode active material layers included in the dry cathode prepared in Example 1 and the wet cathode prepared in Comparative Example 2 were analyzed.

With a 1 mm-wide diamond blade, constant speed analysis was performed to measure a horizontal binding force ($F_H$) according to depth (clearance angle = 10°; rake angle = 20°; shear angle = 45°; horizontal velocity = 4 $\mu$m/s; and vertical velocity = 0.4 $\mu$m/s).

First, a first constant speed analysis was performed from a first position on the surface of the composite cathode active material to the surface of the cathode current collector, and the cathode active material layer was removed by moving the blade horizontally along the surface of the cathode current collector. Then, at a position moved back by 10 $\mu$m from the first position, a second constant-speed analysis was performed under the same conditions as the first constant-speed analysis. The data obtained from the second constant-speed analysis was utilized.

A first horizontal binding force ($F_{H1}$) was measured at a first point, which is 10 % away from the surface of the cathode active material layer, and a second horizontal binding force ($F_{H2}$) was measured at a second point, which is 10 % away from the surface of the cathode current collector, with respect to the total thickness of the cathode active material layer.

The horizontal binding force ratio between the first point and the second point is defined by Equation 3.

$$\text{Horizontal Binding Force Ratio Between First Point and Second Point (\%)} = [F_{H2}/F_{H1}] \times 100 \qquad \text{equation 3}$$

The result of measurement shows that the horizontal binding force ratio of the cathode active material layer of Example 1 was 60 % or more.

It was found that the horizontal binding force ratio of the cathode active material layer of Comparative Example 2 was less than 50 %.

The horizontal binding force ratio of the cathode active material layer of Example 1 was higher than the cathode active material layer of Comparative Example 2.

Thus, it was found that the cathode active material layer (*e.g.*, dry electrode film) of Example 1 shows more uniform (substantially more uniform) binding force and composition distribution, compared to the cathode active material layer of Comparative Example 2.

According to one aspect of embodiments of the present disclosure, by decreasing the internal resistance of a dry electrode film and improving mechanical properties thereof, the cycling performance of a lithium battery employing the dry electrode film can improve.

Further, as the charge transfer resistance of the dry electrode film decreases, the high-rate capability of a lithium battery employing the dry electrode film can improve.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within $\pm$ 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

In present disclosure, "not include a or any 'component'" "exclude a or any 'component'", "'component'-free", and/or the like refers to that the "component" not being added, selected or utilized as a component in the composition, but the "component" of less than a suitable amount may still be included due to other impurities and/or external factors.

In the present disclosure, when particles are spherical, "diameter" indicates a particle diameter or an average particle diameter, and when the particles are non-spherical, the "diameter" indicates a major axis length or an average major axis length.

The portable device, vehicle, and/or the battery, *e.g.*, a battery controller, and/or any other relevant devices or components according to embodiments of the present disclosure described herein may be implemented utilizing any suitable hardware, firmware (*e.g.*, an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

Embodiments are set out in the following clauses:

Clause 1. A dry electrode film comprising:

a dry electrode active material; a dry binder; and
a nitrogen-containing anion, a nitrile group-containing compound, or a combination thereof,
wherein the dry electrode active material comprises: a core; and a shell conforming to a surface of the core,
wherein the shell comprises at least one first metal oxide and a first carbonaceous material,
wherein the at least one first metal oxide is disposed in a matrix of the first carbonaceous material, and
wherein the at least one first metal oxide is represented by $M_aO_b$ ($0<a\leq3$ and $0<b<4$, wherein if a is 1, 2, or 3, b is not an integer), and M is at least one metal selected from Group 2 to Group 16 in the Periodic Table of the Elements.

Clause 2. The dry electrode film of clause 1,

wherein the nitrogen-containing anion comprises $NO_3^-$, $NO_2^-$, $NO^-$, or a combination thereof,
wherein mass spectrometry of the dry electrode film shows a peak corresponding to $NO_3^-$, a peak corresponding to $NO_2^-$, a peak corresponding to $NO^-$, or a combination of the peaks.

Clause 3. The dry electrode film of clause 1 or clause 2,

wherein a charge transfer activation energy ($E_a$) derived from a charge transfer resistance ($R_{ct}$) measured by electrochemical impedance spectroscopy of the dry electrode film is 15 KJ/mol or less,
wherein the dry electrode film has a capacity per unit area of 8.5 mAh/cm$^2$ or more, and

wherein a difference between a charge transfer resistance ($R_{ct}$) and an ionic resistance ($R_{ion}$) as measured at 25 °C by electrochemical impedance spectroscopy of the dry electrode film is less than 10 ohm·cm$^2$.

Clause 4. The dry electrode film of any one of clauses 1 to 3,

wherein the dry electrode film comprises a first lithium salt compound, and the nitrogen-containing anion is derived from the first lithium salt compound,
wherein a content of the first lithium salt compound is about 0.1 wt% to about 3 wt% with respect to a total weight of the dry electrode film, and
wherein the first lithium salt compound comprises LiNOs.

Clause 5. The dry electrode film of any one of clauses 1 to 4, further comprising

a second lithium salt compound,
wherein the second lithium salt compound comprises $LiNO_2$, $Li_2O$, $Li_2S$, $LisN$, $LiF$, $Li_5FeO_4$, $Li_2NiO_2$, $Li_6CO_4$, $Li_2MoO_3$, or a combination thereof.

Clause 6. The dry electrode film of any one of clauses 1 to 5,
wherein a content of the nitrile group-containing compound is about 0.1 wt% to about 3 wt% with respect to a total weight of the dry electrode film.

Clause 7. The dry electrode film of any one of clauses 1 to 6,

wherein the nitrile group-containing compound comprises two or more nitrile groups, and
wherein the nitrile group-containing compound comprises succinonitrile, adiponitrile, pentane-1,2,3-tricyanide, pentane-1,2,5-tricyanide, hexane-1,2,6-tricyanide, hexane-1,3,6-tricyanide, or a combination thereof.

Clause 8. The dry electrode film of any one of clauses 1 to 7,

wherein a metal included in the at least one first metal oxide is at least one metal selected from Al, Nb, Mg, Sc, Ti, Zr, V, W, Mn, Fe, Co, Pd, Cu, Ag, Zn, Sb, and Se, and
wherein the at least one first metal oxide is at least one selected from $Al_2O_z$ (0<z<3), $NbO_x$ (0<x<2.5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnO_x$ (0<x<1), $Sb_2O_z$ (0<z<3), and $SeO_y$ (0<y<2).

Clause 9. The dry electrode film of any one of clauses 1 to 8,

wherein the shell further comprises a second metal oxide,
wherein the second metal oxide is represented by $M_aO_c$ (0<a≤3 and 0<c≤4, wherein if a is 1, 2, or 3, c is an integer), the second metal oxide comprises a same metal as the at least one first metal oxide,
a ratio c/a of c to a in the second metal oxide has a greater value than a ratio b/a of b to a in the at least one first metal oxide, and
the second metal oxide is disposed in the matrix of the first carbonaceous material.

Clause 10. The dry electrode film of clause 9,

wherein the second metal oxide is selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$, and
wherein the at least one first metal oxide is a product of reduction of the second metal oxide.

Clause 11. The dry electrode film of any one of clauses 1 to 10,

wherein the shell has a thickness of about 0.1 nm to about 5 μm, the shell has a monolayer structure or a multilayer structure,
wherein the shell is a dry-coating layer, and a content of the shell with respect to a total weight of the dry electrode active material is about 0.1 wt% to about 5 wt%, and
wherein a content of the at least one first metal oxide with respect to a total weight of the dry electrode active material is about 0.1 wt% to about 3 wt%.

Clause 12. The dry electrode film as of any one of clauses 1 to 11,

wherein the shell further comprises a second carbonaceous material,
the second carbonaceous material comprises a fibrous carbonaceous material having an aspect ratio of 10 or more, and
the second carbonaceous material comprises carbon nanofibers, carbon nanotubes, or a combination thereof,
wherein the carbon nanotubes comprise a primary carbon nanotube structure, a secondary carbon nanotube structure formed by agglomeration of a plurality of primary carbon nanotube particles, or a combination thereof,
wherein the primary carbon nanotube structure is one carbon nanotube unit.

Clause 13. The dry electrode film of any one of clauses 1 to 12,

wherein the core comprises a lithium transition metal oxide,
wherein the lithium transition metal oxide is represented by one selected from Formula 1 to Formula 8 below:

$$\text{Formula 1} \qquad Li_aNi_xCo_yM_zO_{2-b}A_b$$

wherein, in Formula 1, $1.0 \le a \le 1.2$, $0 \le b \le 0.2$, $0.8 \le x < 1$, $0 \le y \le 0.3$, and $0 < z \le 0.3$, wherein x+y+z=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,

$$\text{Formula 2} \qquad LiNi_xCo_yMn_zO_2$$

$$\text{Formula 3} \qquad LiNi_xCo_yAl_zO_2$$

wherein, in Formulas 2 and 3, $0.8 \le x \le 0.95$, $0 \le y \le 0.2$, $0 < z \le 0.2$, and x+y+z=1,

$$\text{Formula 4} \qquad LiNi_xCo_yMn_zAl_wO_2$$

wherein, in Formula 4, $0.8 \le x \le 0.95$, $0 \le y \le 0.2$, $0 < z \le 0.2$, $0 < w \le 0.2$, and x+y+z+w=1,

$$\text{Formula 5} \qquad Li_aCO_xM_yO_{2-b}A_b$$

wherein, in Formula 5, $1.0 \le a \le 1.2$, $0 \le b \le 0.2$, $0.9 \le x \le 1$, and $0 \le y \le 0.1$, wherein x+y=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,

$$\text{Formula 6} \qquad Li_aNi_xMn_yM'_zO_{2-b}A_b$$

wherein, in Formula 6, $1.0 \le a \le 1.2$, $0 \le b \le 0.2$, $0 < x \le 0.3$, $0.5 \le y < 1$, $0 < z \le 0.3$, and x+y+z=1,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof,
A is F, S, Cl, Br, or a combination thereof,

$$\text{Formula 7} \qquad Li_aM1_xM2_yPO_{4-b}X_b$$

wherein, in Formula 7, $0.90 \le a \le 1.1$, $0 \le x \le 0.9$, $0 \le y \le 0.5$, $0.9 < x+y < 1.1$, and $0 \le b \le 2$,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof.

Formula 8 $\qquad$ $Li_aM3_zPO_4$

wherein, in Formula 8, $0.90{\leq}a{\leq}1.1$ and $0.9{\leq}z{\leq}1.1$, and
M3 is chromium (Cr), manganese (Mn), iron (Fe), cobalt (Co), nickel (Ni), copper (Cu), zirconium (Zr), or a combination thereof.

Clause 14. The dry electrode film of any one of clauses 1 to 13,

wherein the dry electrode active material comprises a first dry electrode active material and a second dry electrode active material, the first dry electrode active material and the second dry electrode active material having a different particle size from each other,
the first dry electrode active material is a large-diameter dry electrode active material having a larger particle size than a particle size of the second dry electrode active material,
the second dry electrode active material is a small-diameter dry electrode active material having a smaller particle size than a particle size of the first dry electrode active material,
the first dry electrode active material and the second dry electrode active material have a bimodal particle size distribution in a particle size distribution diagram,
a particle size ratio of the first dry electrode active material to the second dry electrode active material is about 3 : 1 to about 40 : 1,
the particle size of the first dry electrode active material is more than 8 $\mu$m but no more than 30 $\mu$m, and the particle size of the second dry electrode active material is about 1 $\mu$m to less than 8 $\mu$m, and
a weight ratio of the first dry electrode active material to the second dry electrode active material is about 90 : 10 to about 60 : 40.

Clause 15. The dry electrode film of any one of clauses 1 to 14,

wherein the dry binder comprises a fibrillized binder,
the dry binder comprises a fluorinated binder,
the dry binder has a glass transition temperature ($T_g$) of about 15 °C to about 100 °C, and
a content of the dry binder is about 0.1 wt% to about 5 wt% with respect to a total weight of the dry electrode film.

Clause 16. The dry electrode film of any one of clauses 1 to 15, further comprising

a dry conductive material,
wherein the dry conductive material comprises a carbonaceous conductive material,
the carbonaceous conductive material comprises a fibrous carbonaceous material having an aspect ratio of 10 or more, a particulate carbonaceous material having an aspect ratio of less than 10, or a combination thereof, and
a content of the dry conductive material is about 0.1 wt% to about 5 wt% with respect to a total weight of the dry electrode film.

Clause 17. The dry electrode film as of any one of clauses 1 to 16,

wherein the dry electrode film is a self-standing film, the dry electrode film is free of residual processing solvent, and
the dry electrode film has a tensile strength of about 800 kPa to about 5,000 kPa.

Clause 18. A dry electrode comprising:

an electrode current collector; and
the dry electrode film of any one of clauses 1 to 17, disposed on one side or both sides of the electrode current collector.

Clause 19. The dry electrode of clause 18, further comprising

an interlayer disposed between the electrode current collector and the dry electrode active material layer,
wherein the interlayer comprises a carbonaceous conductive material,

wherein the electrode current collector comprises a base film and a metal layer disposed on one side or both sides of the base film,

wherein the base film comprises a polymer, the polymer comprising polyethylene terephthalate (PET), polyethylene (PE), polypropylene (PP), polybutylene terephthalate (PBT), polyimide (PI), or a combination thereof, and wherein the metal layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.

Clause 20. A lithium battery comprising:

a first electrode; a second electrode; and an electrolyte disposed between the first electrode and the second electrode,

wherein the first electrode, the second electrode, or a combination thereof is the dry electrode of clause 18 or clause 19,

wherein the electrolyte is a liquid electrolyte, a solid electrolyte, a gel electrolyte, or a combination thereof, and wherein the solid electrolyte comprises an oxide-based solid electrolyte, a sulfide-based solid electrolyte, a polymer solid electrolyte, or a combination thereof.

**Claims**

1. A dry electrode film comprising:

   a dry electrode active material;
   a dry binder; and
   a nitrogen-containing anion, a nitrile group-containing compound, or a combination thereof,
   wherein the dry electrode active material comprises:

   a core; and
   a shell conforming to a surface of the core,
   wherein the shell comprises a first metal oxide and a first carbonaceous material, the first metal oxide being in a matrix of the first carbonaceous material, and

   wherein the first metal oxide is represented by $M_aO_b$ ($0<a\leq3$ and $0<b<4$, wherein if a is 1, 2, or 3, b is not an integer), and M is at least one metal selected from among Group 2 to Group 16 in the Periodic Table of Elements.

2. The dry electrode film as claimed in claim 1,

   wherein the nitrogen-containing anion comprises $NO_3^-$, $NO_2^-$, $NO^-$, or a combination thereof, and/or
   wherein results of a mass spectrometry analysis of the dry electrode film comprises a peak corresponding to $NO_3^-$, a peak corresponding to $NO_2^-$, a peak corresponding to $NO^-$, or a combination of the peaks.

3. The dry electrode film as claimed in claim 1 or claim 2,

   wherein a charge transfer activation energy ($E_a$) derived from a charge transfer resistance ($R_{ct}$) measured by electrochemical impedance spectroscopy of the dry electrode film is 15 KJ/mol or less, and/or
   wherein the dry electrode film has a capacity per unit area of 8.5 mAh/cm$^2$ or more, and/or
   wherein a difference between a charge transfer resistance ($R_{ct}$) and an ionic resistance ($R_{ion}$) as measured at 25 °C by electrochemical impedance spectroscopy of the dry electrode film is less than 10 ohm·cm$^2$.

4. The dry electrode film as claimed in any one of claims 1 to 3,

   wherein the dry electrode film comprises the nitrogen-containing anion and a first lithium salt compound, and the nitrogen-containing anion is derived from the first lithium salt compound;
   optionally wherein an amount of the first lithium salt compound is about 0.1 wt% to about 3 wt% with respect to a total weight of the dry electrode film, and/or
   optionally wherein the first lithium salt compound comprises LiNOs.

5. The dry electrode film as claimed in any one of claims 1 to 4, further comprising

a second lithium salt compound;
optionally wherein the second lithium salt compound comprises $LiNO_2$, $Li_2O$, $Li_2S$, $Li_3N$, LiF, $Li_5FeO_4$, $Li_2NiO_2$, $Li_6CO_4$, $Li_2MoO_3$, or a combination thereof.

6. The dry electrode film as claimed in any one of claims 1 to 5,

   wherein the dry electrode film comprises the nitrile group-containing compound and an amount of the nitrile group-containing compound is about 0.1 wt% to about 3 wt% with respect to a total weight of the dry electrode film; and/or
   wherein the dry electrode film comprises the nitrile group-containing compound and the nitrile group-containing compound comprises two or more nitrile groups,
   optionally wherein the nitrile group-containing compound comprises succinonitrile, adiponitrile, pentane-1,2,3-tricyanide, pentane-1,2,5-tricyanide, hexane-1,2,6-tricyanide, hexane-1,3,6-tricyanide, or a combination thereof.

7. The dry electrode film as claimed in any one of claims 1 to 6,

   wherein a metal in the first metal oxide is at least one metal selected from among Al, Nb, Mg, Sc, Ti, Zr, V, W, Mn, Fe, Co, Pd, Cu, Ag, Zn, Sb, and Se, and
   wherein the first metal oxide is at least one selected from among $Al_2O_z$ (0<z<3), $NbO_x$ (0<x<2.5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnO_x$ (0<x<1), $Sb_2O_z$ (0<z<3), and $SeO_y$ (0<y<2).

8. The dry electrode film as claimed in any one of claims 1 to 7,

   wherein the shell further comprises a second metal oxide,
   wherein the second metal oxide is represented by $M_aO_c$ (0<a≤3 and 0<c≤4, wherein if a is 1, 2, or 3, c is an integer),
   the second metal oxide comprises a same metal as the first metal oxide,
   a ratio c/a of c to a in the second metal oxide has a greater value than a ratio b/a of b to a in the first metal oxide, and
   the second metal oxide is in the matrix of the first carbonaceous material;
   optionally wherein the second metal oxide is selected from among $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$, and
   wherein the first metal oxide is a reduction product of the second metal oxide.

9. The dry electrode film as claimed in any one of claims 1 to 8,

   wherein the shell has a thickness of about 0.1 nm to about 5 $\mu$m, and the shell has a monolayer structure or a multilayer structure,
   wherein the shell is a dry-coating layer, and an amount of the shell with respect to a total weight of the dry electrode active material is about 0.1 wt% to about 5 wt%, and
   wherein an amount of the first metal oxide with respect to a total weight of the dry electrode active material is about 0.1 wt% to about 3 wt%.

10. The dry electrode film as claimed in any one of claims 1 to 9,

    wherein the shell further comprises a second carbonaceous material,
    the second carbonaceous material comprises a fibrous carbonaceous material having an aspect ratio of 10 or more, and
    the second carbonaceous material comprises carbon nanofibers, carbon nanotubes, or a combination thereof,
    wherein the carbon nanotubes comprise a primary carbon nanotube structure, a secondary carbon nanotube structure formed by agglomeration of a plurality of primary carbon nanotube particles, or a combination thereof, and
    wherein the primary carbon nanotube structure is one carbon nanotube unit.

11. The dry electrode film as claimed in any one of claims 1 to 10,

    wherein the core comprises a lithium transition metal oxide,
    wherein the lithium transition metal oxide is represented by one selected from among Formula 1 to Formula 8:

Formula 1   $Li_aNi_xCo_yM_zO_{2-b}A_b$

wherein, in Formula 1, $1.0 \leq a \leq 1.2$, $0 \leq b \leq 0.2$, $0.8 \leq x < 1$, $0 \leq y \leq 0.3$, and $0 < z \leq 0.3$, wherein $x+y+z=1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,

Formula 2   $LiNi_xCo_yMn_zO_2$

Formula 3   $LiNi_xCo_yAl_zO_2$

wherein, in Formulas 2 and 3, $0.8 \leq x \leq 0.95$, $0 \leq y \leq 0.2$, $0 < z \leq 0.2$, and $x+y+z=1$,

Formula 4   $LiNi_xCo_yMn_zAl_wO_2$

wherein, in Formula 4, $0.8 \leq x \leq 0.95$, $0 \leq y \leq 0.2$, $0 < z \leq 0.2$, $0 < w \leq 0.2$, and $x+y+z+w=1$,

Formula 5   $Li_aCO_xM_yO_{2-b}A_b$

wherein, in Formula 5, $1.0 \leq a \leq 1.2$, $0 \leq b \leq 0.2$, $0.9 \leq x \leq 1$, and $0 \leq y \leq 0.1$, wherein $x+y=1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,

Formula 6   $Li_aNi_xMn_yM'_zO_{2-b}A_b$

wherein, in Formula 6, $1.0 \leq a \leq 1.2$, $0 \leq b \leq 0.2$, $0 < x \leq 0.3$, $0.5 \leq y < 1$, $0 < z \leq 0.3$, and $x+y+z=1$,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof,
A is F, S, Cl, Br, or a combination thereof,

Formula 7   $Li_aM1_xM2_yPO_{4-b}X_b$

wherein, in Formula 7, $0.90 \leq a \leq 1.1$, $0 \leq x \leq 0.9$, $0 \leq y \leq 0.5$, $0.9 < x+y < 1.1$, and $0 \leq b \leq 2$,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X is O, F, S, P, or a combination thereof.

Formula 8   $Li_aM3_zPO_4$

, and
wherein, in Formula 8, $0.90 \leq a \leq 1.1$ and $0.9 \leq z \leq 1.1$, and
M3 is chromium (Cr), manganese (Mn), iron (Fe), cobalt (Co), nickel (Ni), copper (Cu), zirconium (Zr), or a combination thereof.

**12.** The dry electrode film as claimed in any one of claims 1 to 11,
wherein:

(i) the dry electrode active material comprises a first dry electrode active material and a second dry electrode active material, the first dry electrode active material and the second dry electrode active material having a different particle size from each other,

the first dry electrode active material is a large-diameter dry electrode active material having a larger particle size than a particle size of the second dry electrode active material,

the second dry electrode active material is a small-diameter dry electrode active material,

the first dry electrode active material and the second dry electrode active material have a bimodal particle size distribution in a particle size distribution diagram,

a particle size ratio of the first dry electrode active material to the second dry electrode active material is about 3 : 1 to about 40 : 1,

the particle size of the first dry electrode active material is about 8 $\mu$m but about 30 $\mu$m, and the particle size of the second dry electrode active material is about 1 $\mu$m to less than about 8 $\mu$m, and

a weight ratio of the first dry electrode active material to the second dry electrode active material is about 90 : 10 to about 60 : 40; and/or

(ii) the dry binder comprises a fibrillized binder,

the dry binder comprises a fluorinated binder,

the dry binder has a glass transition temperature ($T_g$) of about 15 °C to about 100 °C, and

an amount of the dry binder is about 0.1 wt% to about 5 wt% with respect to a total weight of the dry electrode film; and/or

(iii) the dry electrode film further comprises:

a dry conductive material,

wherein the dry conductive material comprises a carbonaceous conductive material,

the carbonaceous conductive material comprises a fibrous carbonaceous material having an aspect ratio of 10 or more, a particulate carbonaceous material having an aspect ratio of less than 10, or a combination thereof, and

an amount of the dry conductive material is about 0.1 wt% to about 5 wt% with respect to a total weight of the dry electrode film; and/or

(iv) the dry electrode film is a self-standing film,

the dry electrode film is free of residual processing solvent, and

the dry electrode film has a tensile strength of about 800 kPa to about 5,000 kPa.

**13.** A dry electrode comprising:

an electrode current collector; and

the dry electrode film as claimed in any one of claims 1 to 12 on one side or both sides of the electrode current collector.

**14.** The dry electrode as claimed in claim 13, further comprising:

an interlayer between the electrode current collector and the dry electrode active material layer,

wherein the interlayer comprises a carbonaceous conductive material,

wherein the electrode current collector comprises a base film and a metal layer on one side or both sides of the base film,

wherein the base film comprises a polymer, the polymer comprising polyethylene terephthalate (PET), polyethylene (PE), polypropylene (PP), polybutylene terephthalate (PBT), polyimide (PI), or a combination thereof, and

wherein the metal layer comprises indium (In), copper (Cu), magnesium (Mg), titanium (Ti), iron (Fe), cobalt (Co), nickel (Ni), zinc (Zn), aluminium (Al), germanium (Ge), lithium (Li), or an alloy thereof.

**15.** A lithium battery comprising:

a first electrode;

a second electrode; and

an electrolyte between the first electrode and the second electrode,

wherein at least one of the first electrode or the second electrode is the dry electrode as claimed in claim 13 or claim 14,

wherein the electrolyte is a liquid electrolyte, a solid electrolyte, a gel electrolyte, or a combination thereof, and wherein the solid electrolyte comprises an oxide-based solid electrolyte, a sulfide-based solid electrolyte, a polymer solid electrolyte, or a combination thereof.

# FIG. 1A

# FIG. 1B

# FIG. 1C

FIG. 2

# FIG. 3

# FIG. 4

# FIG. 5

# FIG. 6

# FIG. 7

# FIG. 8

1b

4b
2b
4b
3b

7b

8b

5b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *J. Phys. Chem. C,* 2015, vol. 119 (9), 4612-4619